# EUROPÄISCHE PATENTANMELDUNG

(11) **EP 3 434 107 A1**
(43) Veröffentlichungstag der Anmeldung: **30.01.2019**
(21) Anmeldenummer: 17183833.7
(22) Anmeldetag: 28.07.2017
(51) Int. Cl.: A23C 19/032

(54) **LIPASEN AUS BASIDIOMYCETEN FÜR DEN EINSATZ IN DER KÄSEREI**

(71) Anmelder: optiferm GmbH, 87466 Oy-Mittelberg (DE)
(72) Erfinder: Zorn, Holger, 35435 Wettenberg (DE); Kreuter, Nadja, 35428 Langgöns (DE); Weichhard, Edgar, 87466 Oy-Mittelberg (DE); Fleischner, Wilhelm, 91732 Merkendorf (DE); Manhard, Julia, 87629 Füssen (DE)
(74) Vertreter: Moré, Solveig Helga

(57) **Zusammenfassung**

Die vorliegende Erfindung betrifft die Herstellung von Käse, z.B. Salzlakenkäse wie Feta, insbesondere die Verwendung einer von einem Basidiomyceten abgeleiteten Lipase zur Herstellung von Käse und Verfahren zur Herstellung von Käse, bei denen eine von Basidiomyceten abgeleitete Lipase auf ein Vorprodukt der Käseherstellung, bevorzugt auf Milch, einwirkt. Damit wird auch ein mit den erfindungsgemäßen Verfahren hergestellter Käse zur Verfügung gestellt, welcher ein charakteristisches Aroma aufweist. Gegenstand der Erfindung sind ferner Verfahren zur Herstellung einer von einem Basidiomyceten abgeleiteten Lipase aus einer Basidiomyceten-Kultur sowie entsprechende Lipasen, z.B. aus *Flammulina velutipes* oder *Pleurotus citrinopileatus.*

## Beschreibung

Die vorliegende Erfindung betrifft die Herstellung von Käse, z.B. Salzlakenkäse wie Feta, insbesondere die Verwendung einer von einem Basidiomyceten abgeleiteten Lipase zur Herstellung von Käse und Verfahren zur Herstellung von Käse, bei denen eine von Basidiomyceten abgeleitete Lipase auf ein Vorprodukt der Käseherstellung, z.B. auf Käsereimilch oder reifenden Käse, einwirkt. Damit wird auch ein mit den erfindungsgemäßen Verfahren hergestellter Käse zur Verfügung gestellt, welcher ein charakteristisches Aroma aufweist. Gegenstand der Erfindung sind ferner Verfahren zur Herstellung einer von einem Basidiomyceten abgeleiteten Lipase aus einer Basidiomyceten-Kultur sowie entsprechende Lipasen, z.B. aus *Flammulina velutipes* oder *Pleurotus citrinopileatus.*

Im Stand der Technik kommen Lipasen in der Käseherstellung zum Einsatz, da sie zur Erzeugung eines typischen Käsearomas beitragen. Lipasen katalysieren die Spaltung von Esterbindungen, wie beispielsweise die Hydrolyse von Triglyceriden zu Glycerol und freien Fettsäuren, wobei vor allem freigesetzte kurzkettige Fettsäuren direkt zum Aroma des Käses beitragen. Durch den Einsatz von Lipasen in der Käseherstellung kann die Ausbildung des für den jeweiligen Käse typischen Aromas induziert werden. Die Verwendung von Lipasen tierischen Ursprungs und die Verwendung von Lipasen mikrobiellen Ursprungs zu diesem Zweck sind bekannt. Dabei unterscheidet sich das Substratspektrum verschiedener Lipase, so dass der Einsatz unterschiedlicher Lipasen zu der Freisetzung anderer Fettsäuren und damit zu einem unterschiedlichen Aroma des Käses führt.

Tierische Lipasen werden im Stand der Technik beispielsweise aus dem Drüsengewebe aus Mund- und Rachenraum von Jungtieren wie z. B. Kälbern, Lämmern oder Ziegenkitzen gewonnen. US 5320959 A (1994) beschreibt ein Verfahren zur Extraktion von Lipase aus dem Mund- und Rachenraum von Jungtieren. Ein für Feta-Käse oder ähnliche Käse typisches Aroma entsteht beispielsweise durch die Einwirkung einer solchen Zungengrundlipase (auch als Ziegenlipase bezeichnet), welche die Carbonsäuren Essigsäure, Buttersäure, Capronsäure, Caprylsäure und Caprinsäure aus Triglyceriden freisetzen kann, auf Milch oder Vorprodukte der Käseherstellung.

Nachteilig ist, dass Käse, der unter Verwendung von Lipasen tierischen Ursprungs hergestellt wurde, nicht für Personen, die sich streng vegetarisch ernähren wollen, geeignet ist. Des Weiteren kommt ein Käse, der unter Verwendung tierischer Lipasen hergestellt wurde, auch für Mitglieder von Glaubensrichtungen, deren Lebensweise mit bestimmten Ernährungsregeln verbunden ist, die sich beispielsweise koscher oder halal ernähren wollen, nicht in Betracht. Um diese Problematik zu umgehen, lassen einige Käseproduzenten seit einigen Jahren die tierische Lipase weg, was dazu geführt hat, dass einige Käsesorten ihr charakteristisches Aroma verloren haben.

Alternativ zu tierischen Lipasen ist im Stand der Technik die Verwendung von mikrobiellen Lipasen, beispielsweise aus Schimmelpilzen, beschrieben.

US 3973042 A beschreibt die Verwendung von mikrobiellen Lipasen aus Schimmelpilzen oder aus tierischen Quellen zur Herstellung von Blauschimmelkäse. US 4595594 A offenbart ein Verfahren zur Herstellung eines Käseproduktes mit intensivem Käsegeschmack unter Verwendung von tierischen oder mikrobiellen Lipasen. EP 1535519 A beschreibt die Verwendung von Lipasen, insbesondere Pilzlipasen, in Aromatisierungssystemen für die Käseherstellung, die die Herstellung von Käse mit dem gewünschten Geschmacksprofil ermöglichen. EP 0150743 B1 offenbart eine Zusammensetzung zur Beschleunigung des Reifungsprozesses von Käse unter Verwendung von Lipasen. EP 1085817 B1 beschreibt ein Verfahren zur Herstellung eines Käse-Aromas unter Verwendung von Lipasen. US20110123674 beschreibt die Herstellung von Käse-Aromakompositionen zur Erzeugung eines Käsegeschmacks in Lebensmitteln.

Dem gegenüber steht der Fachmann vor dem Problem, alternative Verfahren zur Herstellung von Käse mit charakteristischem Aroma bereitzustellen, bei dem nicht-tierische Lipasen eingesetzt werden sollen, welche die Herstellung von vegetarischen, koscherem und halal-gerechtem Käse erlauben. Die Aufgabe wird durch die vorliegende Erfindung gelöst, insbesondere durch den Gegenstand der Ansprüche.

Die Erfinder der vorliegenden Anmeldung haben entdeckt, dass aus Basidiomyceten abgeleitete Lipasen, in der Käseherstellung eingesetzt, ein ähnliches Aroma erzeugen wie tierische Lipasen, insbesondere wie die klassischerweise in der Herstellung von Salzlakenkäse, etwa Feta, eingesetzten Lipasen, z.B. Ziegenzungengrundlipase.

Die vorliegende Erfindung ermöglicht daher die Verwendung einer von einem Basidiomyceten abgeleiteten Lipase zur Herstellung von Käse.

Vorteilhafterweise können Käse, die unter Verwendung dieser Lipase herstellt wurden, vegetarische, koschere oder halal Käse sein. Dasselbe gilt für die als Nebenprodukt bei der Käseproduktion anfallende Molke, welche als Nahrungsmittel oder auch beispielsweise als Füllstoff für Medikamente in der Pharmaindustrie Anwendung finden kann.

Die vorliegenden Erfindung ermöglicht daher auch ein Verfahren zur Herstellung von Molkeprodukten, z.B. Molke, Lactose oder Molkeproteinen wie alpha-Lactalbumin, beta-Lactoglobulin oder Lactoferrin, welche vegetarisch, koscher und/oder halal sein können, bei dem eine von einem Basidiomyceten abgeleiteten Lipase zur Herstellung von Käse verwendet und die Molke abgetrennt wird.

Ebenfalls Gegenstand der Erfindung ist ein Verfahren zur Herstellung von Käse oder Molkeprodukten, umfassend das Einwirken einer von einem Basidiomyceten abgeleiteten Lipase auf ein Vorprodukt der Käseherstellung, bevorzugt auf Milch.

Der Basidiomycet, von dem die Lipase abgeleitet ist, ist bevorzugt für Menschen nicht giftig, z.B. ein Speisepilz. Bei Verwendung einer Lipase aus für Menschen giftigen Basidiomyceten ist bei der Isolierung der Lipase besonderes Augenmerk auf die Abtrennung von Giften von der Lipase zu legen. Alternativ kann auch eine gentechnisch in einer anderen Wirtszelle hergestellte Lipase aus giftigen Basidiomyceten eingesetzt werden. Vorteilhafterweise ist der Basidiomycet ein Pilz aus der Unterabteilung Agaricomycotina, bevorzugt aus der Klasse Agaricomycetes, bevorzugt aus der Unterklasse Agaricomycetidae, besonders bevorzugt aus der Ordnung Agaricales, z.B. aus den Familien der Physalacriaceae oder Pleurotaceae.

Bevorzugt kann der Basidiomycet in Submerskultur kultiviert werden. Eine Emers-Kultivierung ist ebenfalls möglich.

In einer besonders vorteilhaften Ausgestaltung ist der Basidiomycet ausgewählt aus der Gruppe umfassend *Flammulina spp., Pleurotus spp., Agrocybe spp., Armillaria spp., Auricularia spp., Clitocybe spp., Fistulina spp., Hericium spp., Hypholoma spp., Hypsizygus spp., Kuehneromyces spp., Laetiporus spp., Lactarius spp., Lentinula spp., Lentinus spp., Lycoperdon spp., Macrolepiota spp., Phallus spp., Piptoporus spp., Panellus spp., oder Polyporus spp.,* insbesondere *Flammulina velutipes, Pleurotus citrinopileatus, Agrocybe aegerita, Armillaria bulbosa, Armillaria gallica, Armillaria melea, Auricularia fuscosuccinea, Clitocybe geotropa, Fistulina hepatica, Hericium erinaceus, Hericium cirrhatum, Hericium coralloides, Hypholoma capnoides, Hypsizygus tessulatus, Kuehneromyces mutabilis, Laetiporus sulphureus, Lactarius deliciosus, Lentinula edodes, Lentinus squarrolusus, Lycoperdon pyriforme, Macrolepiota procera, Phallus impudicus, Piptoporus betulinus, Pleurotus eryngü, Pleurotus flabellatus, Pleurotus ostreatus, Panellus serotinus, oder Polyporus umbellatus.*

Bevorzugt ist der Basidiomycet *Flammulina velutipes* oder *Pleurotus citrinopileatus,* z.B. *Flammulina velutipes* hinterlegt unter der Stammnummer DSM-1658 oder *Pleurotus citrinopileatus* hinterlegt unter der Stammnummer DSM-5341 bei der Deutschen Sammlung von Mikroorganismen und Zellkulturen GmbH. Aus diesen Basidiomyceten, vor allem aus *Flammulina velutipes,* abgeleitete Lipasen führten zu einem besonders guten Aroma von damit hergestelltem Käse, und eignen sich insbesondere zur Herstellung von Salzlakenkäse, z.B. Feta.

Bevorzugt wird die Lipase aus einer Basidiomyceten-Kultur isoliert. In einer anderen Ausführungsform wird die Lipase unter Verwendung von gentechnisch veränderten Organismen, z.B. Hefen oder Bakterien, hergestellt. Gentechnisch veränderte Organismen zur Herstellung der Lipase können beispielsweise *S. cerevisiae, P. pastoris* oder *E. coli* sein.

Lipasen werden aufgrund ihrer Fähigkeit zur Spaltung von Esterbindungen von Triglyceriden auch als Esterasen bezeichnet. Die Begriffe Lipase und Esterase werden hier als Synonyme verwendet. Der Begriff "eine" oder "ein" umfasst im Rahmen dieser Erfindung immer ein oder mehrere, sofern nicht ausdrücklich anders gekennzeichnet, so dass eine Lipase im Sinne dieser Erfindung ein oder mehrere Lipasen, z.B. auch eine Mischung von verschiedenen Homologen und/oder Derivaten dieser Lipase oder von verschiedenen Lipasen umfasst. Insbesondere zur Herstellung von Salzlakenkäse bevorzugte Lipasen sind dazu in der Lage, aus Triglyceriden mit entsprechenden Fettsäuren die Fettsäuren Essigsäure, Buttersäure, Capronsäure, Caprylsäure und Caprinsäure abzuspalten.

Bevorzugt ist Gegenstand der Erfindung ein Verfahren zur Herstellung von Käse. Der Käse kann z.B. ein Salzlakenkäse, Pasta-Filata-Käse, Hartkäse (auch Extrahartkäse), Schnittkäse, halbfester Schnittkäse, Halbhartkäse, Halbweichkäse, Weichkäse, oder Frischkäse sein, z.B. Feta, Bergkäse, Gruyere, Emmentaler, Cheddar, Appenzeller, Comte, Jurassic, Sbrinz, Tilsiter, Raclette, Gouda, Edamer, Provolone, Kaschkawal, Romano, Parmesan, Grana Padano, Pecorino, Manchego, Graviera, Kefalotir, ein Weichkäse mit Schimmelreifung oder ein Weichkäse mit Rotschmiere, Mozzarella, Camembert, Brie oder Frischkäse. Bevorzugt handelt es sich um einen reifenden Käse, also z.B. kein Quark oder Frischkäse, um die Entwicklung eines deutlichen Aromas zu ermöglichen. Es kann sich um Rahmkäse, Vollfettkäse, Viertelfettkäse oder Magerkäse handeln.

Bevorzugt ist der Käse ein aromatischer Käse. Ein Käsetyp, der erfindungsgemäß besonders vorteilhaft hergestellt werden kann, ist ein Salzlakenkäse wie Fetakäse oder ein Käse griechischer Art (dies wird hierin unabhängig von der geographischen Herkunft synonym benutzt), Hirtenkäse, Balkankäse, bulgarischer Salzlakenkäse (z.B. Sirene oder Schipka-Käse), Beyaz peynir, Valbreseo. Die besondere Eignung von Lipasen aus *Pleurotus citrinopileatus* oder *Flammulina velutipes* zur Herstellung derartiger Käse ist im Beispielteil beschrieben.

Auch andere aromatische Käse können mit diesen Lipasen oder Lipasen mit ähnlichen Charakteristika, insbesondere ähnlichem Substratprofil vorteilhafterweise hergestellt werden, z.B. Provolone, Kaschkawal, Romano, Pressato, Parmesan, Grana Padano, Pecorino, Rigatino, Crotonese, Canestrato, Fiore Sardo, Mozzarella, Manchego, Bergkäse, Gruyere, Emmentaler, Cheddar, Appenzeller, Comte, Jurassic, Sbrinz, Tilsiter. Auch andere Käse lassen sich - je nach gewünschtem Aroma - mit anderen Basidiomyceten-Lipasen vorteilhaft herstellen.

In einer vorteilhaften Ausgestaltung umfasst die erfindungsgemäße Käseherstellung das in Kontakt bringen der von einem Basidiomyceten abgeleiteten Lipase mit einem Vorprodukt der Käseherstellung, z.B. Milch. Das Verfahren kann folgende Schritte umfassen:
a) Bereitstellen eines Käsevorprodukts, welches Käsereimilch umfasst,
b) Dicklegen des Käsevorprodukts, wobei Gallerte (auch als Dickete bezeichnet) entsteht,
c) Schneiden der Gallerte,
d) Formen,
e) Salzen, und
f) Reifen,
wobei man ein Vorprodukt der Käseherstellung mit einer von einem Basidiomyceten abgeleiteten Lipase in Kontakt bringt, was in einem der Schritte a, b, c oder d, bevorzugt aber in Schritt a oder b erfolgt, am meisten bevorzugt in Schritt b.

Das Käsevorprodukt in Schritt a umfasst Käsereimilch, z.B. Kuhmilch, Schafsmilch, Ziegenmilch, Büffelmilch oder ein pflanzliches Milchersatzprodukt, z.B. Sojamilch, Hafermilch, Reismilch, Dinkelmilch, Nussmilch oder Mandelmilch, Milch aus Flohsamenschalen, welches hierin auch als Milch bezeichnet wird. Am häufigsten wird Käse unter Verwendung von Kuhmilch hergestellt. Salzlakenkäse wird z.B. oft aus Kuhmilch, Ziegenmilch oder Schafsmilch hergestellt. Veganer Salzlakenkäse kann z.B. auch auf Basis von Sojamilch hergestellt werden.

Die Milch kann Rohmilch oder pasteurisierte Milch sein. Üblicherweise wird die Milch zentrifugiert bzw. separiert, bevorzugt auch homogenisiert, um z.B. Lipasen für die Lypolyse eine höhere Angriffsfläche zu bieten. Auch eine Pasteurisierung findet statt, es sei denn, man will Rohmilchkäse herstellen. Um den gewünschten Fettgehalt des Käses zu erhalten, wird die Milch meist entrahmt und anschlie-ßend z.B. mit Sahne auf einen definierten Fettgehalt eingestellt.

Das Käsevorprodukt kann auf einen Fettgehalt von ca. 1,7 - 10%, bevorzugt 3-8,5% (v/v) eingestellt werden, z.B. von 3,2 - 3,6% bei Sbrinz, 3,4 - 3,7 % bei Provolone, 3,3-4,5% oder 3,5-4,2 % bei Salzlakenkäse, wobei der Fettgehalt entsprechend der erforderlichen Fettgehaltsstufe (Fett i. Tr.) des Käseendprodukts angepasst werden muss. Dem Käsevorprodukt kann bei der Bereitstellung oder auch später in Schritt b Calcium, z.B. in Form von Calciumchlorid, zugegeben werden.

Vor dem Dicklegen wird in Schritt b üblicherweise (z.B. für Salzlakenkäse, Pasta-Filata-Käse, Hartkäse (auch Extrahartkäse), Schnittkäse, halbfester Schnittkäse, Halbhartkäse, Weichkäse) das Käsevorprodukt mit Hilfe von Starterkulturen, welche Milchsäurebakterien (z.B. *Lactobacillus* sp. *Leuconostoc sp., Lactococcus sp.)* umfassen, in Kontakt gebracht und vorgereift und anschließend optional enzymatisch, z.B., mit Lab, zum Gerinnen gebracht.

Als Starterkulturen können z.B. mesophile und/oder thermophile Direktstarterkulturen, beispielsweise Lyofast M 036 L (Sacco Srl.) verwendet werden.

Es kann tierisches Lab, z.B. Lab aus Kälbermagen, eingesetzt werden, bevorzugt wird zur Herstellung eines vegetarischen, koscheren oder halal Produkts jedoch ein Labersatzstoff eingesetzt. Dabei handelt es sich um mikrobielles und/oder biotechnologisch hergestelltes Lab, z.B. mit Hilfe von Schimmelpilzen wie *Mucor mihei* oder *Aspergillus niger* hergestelltes Lab. Bevorzugt ist das Lab mikrobiell hergestelltes Labenzym, sog. Mikrolab, z.B. opti-lase (optiferm GmbH).

Auch pflanzliche Enzyme, z.B. aus *Cynara cardunculus,* können verwendet werden. Zum Dicklegen wird das Käsevorprodukt üblicherweise erwärmt, z.B. auf 27°-45°C, z.B. auf 36-38°C bei Provolone, z.B. auf 31-32°C bei Kaschkawal, z.B. auf 32-34°C bei Salzlakenkäse oder etwa 33°C.

Bei nicht reifenden Käsen, z.B. Quark, Frischkäse, Sauermilchkäse setzt man nur Milchsäurebakterien zu, kein Lab oder nur eine kleine Menge Lab zur Verbesserung der Säuregerinnung.

Bevorzugt wird die aus einem Basidiomyceten abgeleitete Lipase, z.B. zur Herstellung von Salzlakenkäse, dem Käsevorprodukt gleichzeitig mit der Starterkultur und optional Calcium zugegeben. Es ist aber auch möglich, das Milchvorprodukt bereits vorher oder nachher (z.B. bei Zugabe von Lab) mit den Lipasen zu mischen.

Die Lipase kann bei der erfindungsgemäßen Verwendung oder im erfindungsgemäßen Verfahren in einer Endkonzentration von 70 -285 U/L bezogen auf Caprylat in 3 L Käsevorprodukt, z.B. Käsereimilch zugegeben werden. Besonders bevorzugt wird die Lipase in einer Konzentration von 100 -200 U/L oder 150-170 U/L zugegeben.

Das Dicklegen kann ca. 25 - 75 min dauern, bevorzugt ca. 30 - 45 min.

Eine Vorreifung kann, z.B. nach Mischen der auf ca. 4,2% Fett eingestellten Milch mit der Starterkultur, Calciumchlorid und der Lipase für ca. 30-60 min, z.B. 45-50 min oder etwa 45 min erfolgen. Nach Zugabe von Lab (z.B. opti-lase, optiferm GmbH) erfolgt über die nächsten 15-20 min, ca. 16 min die Gerinnung. Nach weiterer Dickung von ca. 30-60 min, z.B. 45-50 min oder etwa 45 min hat die Dickete die gewünschte Festigkeit z.B. zur Herstellung von Salzlakenkäse erreicht.

Hat die dickgelegte Milch die gewünschte Festigkeit, so wird sie in Schritt c, z.B. mit einer Käseharfe, geschnitten. Das Produkt des Schneidens wird als Käsebruch bezeichnet. Je feiner der Käsebruch zerkleinert wird, desto mehr Molke setzt sich ab und umso härter wird der fertige Käse. Für Salzlakenkäse wird der Käsebruch in ca. Haselnuss-große Stücke geschnitten.

Optional kann der Käsebruch gebrannt werden.

Das Formen in Schritt d kann z.B. Verziehen und Abfüllen in Formen sowie Wenden (z.B. 2-10-mal, z.B. ca. 4-mal) umfassen. Durch Abtropfen, Pressen und/oder Wenden kann weitere Molke vom Käsebruch getrennt werden.

Das Salzen als Schritt d wird bei Herstellung aller Käsesorten durchgeführt, außer bei Frischkäse, und kann durch Trockensalzen oder bevorzugt durch Baden in Salzlake stattfinden. Der Salzgehalt der Lake beträgt je nach Käsesorte 15 - 25% (m/v), bevorzugt 18 - 22% (m/v). Zur Herstellung von Salzlakenkäse kann ein Salzbad von ca. 60 min bei 15°C und einem Salzgehalt von ca. 20% erfolgen, wobei der pH des Salzbads idealerweise dem pH des gesäuerten Käseteigs zu Beginn des Salzens entspricht, z.B. pH 5,2.

Als Schritt e erfolgt die Reifung des Käses, die für alle Käse mit Ausnahme der Frischkäse erforderlich ist. Eine tage-, wochen- oder monatelange Reifung ist wichtig für die Erreichung des vorgegebenen Verzehrstatus und die Entwicklung des sortentypischen Aromas. Dabei spielen Stoffwechselvorgänge von Mikroorganismen eine bedeutende Rolle, aber im Rahmen der Erfindung auch die Spaltung von Triglyceriden durch die erfindungsgemäßen Lipasen. Während der Reife werden die Laibe optional gewendet, bestrichen, gebürstet, mit Edelschimmel oder Rotschmiere behandelt oder in Kräutern gewälzt. Die Reifung kann zwischen zwei Wochen oder bis zu mehreren Jahren dauern. Bevorzugt erfolgt die Reifung bei hoher Luftfeuchtigkeit (z.B. 70-95%) und im Wesentlichen gleichbleibender Temperatur, bevorzugt bei Temperaturen unter 20°C, z.B. 10-15°C. Die Raumkonditionen im Reifelager variieren in Abhängigkeit von der jeweiligen Käsesorte, von der Reifungszeit und Käsebehandlung.

Für die Herstellung von Salzlakenkäse wird der Käse üblicherweise nach dem Salzbad abtropfen gelassen (z.B. für etwa 24 h), und dann unter Luftabschluss reifen gelassen, z.B. in Folie eingeschweißt. Dabei kann eine Reifung für ca. 20-60 Tage bevorzugt bei Temperaturen unter Raumtemperatur (20°C), z.B. bei 10-15°C erfolgen, z.B. 25-40 Tage oder ca. 30 Tage bei 10-15°C. Eine weitere Lagerung, bevorzugt bei ca. 4-15°C oder 4-8°C ist möglich.

Die Herstellung kann auch verschiedene andere Verfahren zum Oberflächenschutz, z.B. die Entwicklung einer Käserinde, Aufbringen einer Schutzschicht aus Käse-Coating, Wachs oder Paraffin und/oder das Verpacken in Folie umfassen. Käse, auch Salzlakenkäse, kann auch z.B. in Öl, z.B. Olivenöl, ggf. mit Gewürzen, eingelegt und verpackt werden.

Von besonderem Vorteil ist bei der erfindungsgemäßen Verwendung oder dem erfindungsgemäßen Verfahren, dass die Lipase bei der Käseherstellung ein Aroma erzeugt, wobei das Aroma bevorzugt charakterisiert ist durch das Vorhandensein der freien Fettsäuren Capronsäure (n-Hexansäure), Caprylsäure (n-Octansäure) und Caprinsäure (n-Decansäure) sowie Essigsäure und Buttersäure (n-Butansäure). Carbonsäuren wie Capronsäure, Caprylsäure, Caprinsäure zeichnen sich durch einen bockartigen Geruch aus und sind daher besonders geeignet zur Herstellung von scharfen, pfeffrigen, pikanten Aromen wie es beispielsweise für Salzlakenkäse wie Feta, Bergkäse, Provolone, Parmesan und ähnliche aromatische Käse gewünscht ist.

Ein Gegenstand der Erfindung ist auch ein Verfahren zur Herstellung einer von einem Basidiomyceten abgeleiteten Lipase aus einer Basidiomyceten-Kultur, das Kultur eines Basidiomyceten in einem Medium (bevorzugt Malzextraktpepton-Medium), umfassend einen Induktor zur Steigerung der Sekretion von Lipasen, und Isolierung des die Lipasen umfassenden Kulturüberstandes, sowie Reinigung der Lipase umfasst

Bevorzugt umfasst das Verfahren die folgenden Schritte:
a) Kultur eines Basidiomyceten in einem Medium (bevorzugt Malzextraktpepton-Medium), umfassend einen Induktor zur Steigerung der Sekretion von Lipasen,
b) Isolierung des die Lipasen umfassenden Kulturüberstandes,
c) Proteinfällung,
d) Konzentrierung, und
e) Reinigung der Lipase.

Schritte c-e können hierbei in jeder Reihenfolge oder gleichzeitig durchgeführt werden. Bevorzugt werden die Schritte in der beschriebenen Reihenfolge a)-e) durchgeführt.

Die Kultur des Basiodiomyceten kann in einem geeigneten Medium erfolgen, z.B. Malzextraktpepton-Medium, Standardnährlösung (SNL) oder Kartoffel-Glucose-Medium. Bevorzugt erfolgt die Kultur in Malzextraktpepton-Medium. Die Kultur kann z.B. auf einem Schüttler (z.B. 150 rpm) bei Lichtausschluss bei ca. 20-30°C, bevorzugt ca. 24-25°C erfolgen. Ein geeigneter Zeitraum kann z.B. 10-30 Tage oder 20-21 Tage sein. Eine Vorkultur ohne Zugabe des Induktors ist möglich.

Der Induktor zur Steigerung der Sekretion von Lipasen umfasst Triglyceride, bevorzugt aus Milchprodukten, oder Triglyceride, die auch in Milchprodukten vorkommen. Als Induktor können z.B. Butterschmalz, Butter oder Quarkfett eingesetzt werden, bevorzugt Quarkfett und Butterschmalz, insbesondere Quarkfett.

Die Isolierung des die Lipasen umfassenden Kulturüberstandes kann z.B. nach Sedimentierung oder Zentrifugation oder durch Filtrierung erfolgen.

Erfindungsgemäß kann die Proteinfällung eine Fällung mit Ammoniumsulfat oder Ethanol sein, bevorzugt eine Ammoniumsulfatfällung. Es kann z.B. mit 60 oder 70% Ammoniumsulfat gefällt werden, wobei das gefällte Protein weiter aufgearbeitet wird. Optional wird eine fraktionierte Fällung durchgeführt.

Eine Konzentrierung, Umpufferung oder ein Entsalzen kann z.B. durch Zentrifugation mit einem Filter durchgeführt werden, z.B. mit einer Ausschlussgröße (MWCO; molecular weight cut-off) von 10-30 kDa, bevorzugt 10 kDa, z.B. mittels Vivaflow-Filter. Beispielsweise kann eine Abtrennung von Bestandteilen, die mehr als 300 kDa groß sind, durch eine erste Filtration mit einem Filter mit MWCO von 300 kDa durchgeführt werden, gefolgt von einer oder mehreren weiteren Filtrationsschritten mit Filter mit geringerem MWCO zur Konzentrierung, beispielsweise 100, 50, 30, 10 kDa. Besonders bevorzugt findet der letzte Filtrationsschritt mit einem Filter mit einer MWCO von 10 kDa statt.

In einem erfindungsgemäßen Verfahren kann die Reinigung oder Isolierung mehrere, bevorzugt mindestens zwei (z.B. drei oder vier oder fünf) Schritte umfassen.

Ein bevorzugter Schritt ist eine Ionenaustauschchromatographie (IEX), z.B. Anionenaustauschchromatographie (AEX) oder Kationenaustauschchromatographie (CEX), und/oder Größenausschlusschromatographie (SEC). Dieser Schritt kann z.B. per FPLC (Fast Protein Liquid Chromatography) durchgeführt werden, etwa mit einer Diethylaminoethyl -Matrix, z.B. mit einer DEAE Sepharose *Fast Flow* Säule (DEAE-FF). Es können auch mehrere Ionenaustauschchromatographien durchgeführt werden.

Ein weiterer bevorzugter Schritt der Isolierung kann z.B. Größenausschlusschromatographie sein, z.B. als zweiter Schritt nach einer Ionenaustauschchromatographie.

Bevorzugt umfasst das erfindungsgemäße Verfahren zur Herstellung einer von einem Basidiomyceten abgeleiteten Lipase die Kultur des Basidiomyceten (z.B. *Pleurotus citrinopileatus* oder *Flammulina velutipes),* Isolierung des Kulturüberstands, eine Proteinfällung, z.B. mit Ammoniumsulfat, Konzentrierung, IEX (bevorzugt AEX) und SEC, optional eine hydrophobe Interaktionschromatographie (HIC). Die Reihenfolge der Schritte kann auch geändert werden.

Vorteilhafterweise werden bei den erfindungsgemäßen Aufreinigungsverfahren jeweils Fraktionen mit hoher Esterase-/Lipase-Aktivität ausgewählt. Die Esterase-/Lipase-Aktivität der erfindungsgemäßen Lipasen können mit im Stand der Technik bekannten Esterase-/Lipaseassays bestimmt werden, z.B. mit dem Esteraseassay nach Purdy und Kolattukudy, 1973 (Purdy und Kolattukudy 1973), oder dem Lipaseassay nach Winkler und Stuckmann, 1979, bevorzugt nach Purdy und Kolattukudy. Bevorzugte Esterase-/Lipase-Aktivitäten ausgewählter Fraktionen sind beispielsweise mindestens 70 U/L, mindestens 200 U/L, mindestens 300 U/L, mindestens 400 U/L oder mindestens 500 U/L.

In einer besonders bevorzugten Ausführungsform enthalten die Lipasen nach Durchführung der Aufreinigungsschritte des erfindungsgemäßen Verfahrens eine gegenüber dem Kulturüberstand im Verhältnis zur Esterase-/Lipase-Aktivität verringerte Peptidase-Aktivität, bevorzugt, keine signifikante Peptidase-Aktivität, d.h., was z.B. erreicht werden kann, indem Reinigungsverfahren ausgewählt werden, die Lipasen und Peptidasen voneinander trennen. Es können z.B. Fraktionen mit Peptidase-Aktivität verworfen werden. Dadurch kann ein eventuell durch vorhandene Peptidasen begründeter bitterer und seifiger Fehlgeschmack vermieden werden. Peptidase-Aktivität kann mittels Azocasein (Kilcawley et al. 2002) getestet werden.

In einer Ausführungsform stellt die Erfindung ein Verfahren zur Herstellung von Käse zur Verfügung, bei dem man nach dem hierin beschriebenen erfindungsgemäßen Verfahren eine von einem Basidiomyceten abgeleitete Lipase herstellt und dann diese Lipase bei einem erfindungsgemäßen Verfahren zur Herstellung von Käse einsetzt.

Ein anderer Gegenstand der Erfindung ist eine von einem Basidiomyceten Lipase, bevorzugt von einem hierin beschriebenen Basidiomyceten, z.B. *Pleurotus citrinopileatus* oder *Flammulina velutipes,* die bevorzugt in der Lage ist, eine oder mehrere der freien Fettsäuren aus der Gruppe bestehend aus Essigsäure, Buttersäure, Capronsäure, Caprylsäure und Caprinsäure aus Triglyceriden freizusetzen. Derartige Lipasen sind z.B. durch ein erfindungsgemäßes Verfahren erhältlich.

In einer Ausführungsform ist die Lipase von einem Basidiomyceten abgeleitet, z.B. aus *Flammulina velutipes.* Im Stand der Technik ist die Peptidsequenz einer *Putative carotinoid ester lipase* (Uniprot Zugriffsnummer G8A515 aus *Flammulina velutipes* bekannt, welche 725 Aminosäuren umfasst (SEQ ID NO: 1), Molekulargewicht 79 kDa. Eine Funktion des Proteins war im Stand der Technik nicht bekannt.

In einer Ausführungsform weist die erfindungsgemäße Lipase aus *Flammulina velutipes* 250-725 Aminosäuren auf. Optional hat sie weniger als 725 Aminosäuren, insbesondere weniger als 500 Aminosäuren.

Bei Analyse der im Lipase-Assay aktiven Fraktionen aus *Flammulina velutipes* mit halb-nativem SDS-PAGE mit Esterasefärbung wurde gefunden, dass die aktivsten Proteine bei ca. 30-40 kDa nachzuweisen waren. Weitere aktive Proteine fanden sich bei ca. 60-70 kDa.

In einer Ausführungsform hat die erfindungsgemäße Lipase aus *Flammulina velutipes* daher ein Molekulargewicht von weniger als 79 kDa, insbesondere 25-45 kDa, bevorzugt von 30-40 kDa aufweist, besonders bevorzugt von 32-38 kDa. In einer anderen Ausführungsform ist das Molekulargewicht ca. 60-70 kDa. Es kann auch eine Zusammensetzung mit einer eine Mischung verschiedener Formen vorliegen. In einer Ausführungsform haben die Lipasen in einer solchen Mischung zu mehr als 50%, bevorzugt zu mehr als 80% ein Molekulargewicht von ca. 25-45 kDa.

Bei der Sequenzierung wurden Fragmente der Lipase aus ca. Aminosäurepositionen 80-420 der oben genannten *Putative carotinoid ester lipase* gefunden. In einer Ausführungsform umfasst die Lipase eine Aminosäuresequenz, die mindestens 80%, bevorzugt mindestens 85%, mindestens 90% oder mindestens 95%, z.B. 100% Identität mit einer Sequenz von SEQ ID NO:2. aufweist, wobei die Lipase von einem Basidiomyceten abgeleitet ist, z.B. aus *Flammulina velutipes.* Besonders bevorzugt weist die Lipase nicht 90% der Sequenz von SEQ ID NO: 1 oder mehr, insbesondere nicht die vollständige Sequenz von SEQ ID NO: 1 auf.

Es kann jedoch auch eine Lipase, welche eine Aminosäuresequenz umfasst, die mindestens 80%, bevorzugt mindestens 85%, mindestens 90% oder mindestens 95%, oder 100% Identität mit einer Sequenz von SEQ ID NO:1 aufweist, zur Herstellung von Käse (bevorzugt Salzlakenkäse oder einem anderen aromatischen Käse), z.B. mit dem erfindungsgemäßen Verfahren, verwendet werden, wobei die Lipase von einem Basidiomyceten abgeleitet ist, z.B. aus *Flammulina velutipes.*

Der Begriff, dass die Lipase von einem Basidiomyceten abgeleitet ist, schließt Mutationen nicht aus, es kann sich also um Homologe der Lipase mit SEQ ID NO: 1 aus anderen Basidiomyceten (z.B. *Flammulina spp.*), ggf. in mutierter Form, oder mutierte Formen der Lipase aus *Flammulina velutipes* handeln, z.B. mit einem, zwei oder drei Aminosäureaustausch, bevorzugt außerhalb des Bereichs von SEQ ID NO: 2.

Die erfindungsgemäße Lipase ist optional, bevorzugt aber dann, wenn die Lipase SEQ ID NO: 1 aufweist, an eine Aminosäuresequenz gekoppelt, die die Aufreinigung erleichtert, z.B. ein His-Tag. Zusätzlich oder alternativ wurde die erfindungsgemäße Lipase in gentechnisch veränderten Organismen hergestellt, so dass sie ein anderes Glykosylierungsmuster aufweisen kann als bei Reinigung aus einem Basidiomyceten.

In einer Ausführungsform ist die Lipase von einem *Pleurotus citrinopileatus* abgeleitet. Bei Analyse der im Lipase-Assay aktiven Fraktionen aus diesem Basidimyceten mit halb-nativem SDS-PAGE mit Esterasefärbung wurde gefunden, dass die aktivsten Proteine bei ca. 30-40 kDa nachzuweisen waren. Weitere aktive Proteine fanden sich bei ca. 80-95 kDa.

Bevorzugt hat die erfindungsgemäße Lipase aus *Pleurotus citrinopileatus* daher ein Molekulargewicht von 25-45 kDa, bevorzugt von 30-40 kDa aufweist, besonders bevorzugt von 32-38 kDa. In einer anderen Ausführungsform ist das Molekulargewicht ca. 80-95 kDa oder es liegt eine Mischung dieser beiden Formen vor. In einer Ausführungsform hat die Lipase zu mehr als 50%, bevorzugt zu mehr als 80% ein Molekulargewicht von ca. 25-45 kDa. In einer Ausführungsform umfasst die Lipase eine Sequenz mit einer Aminosäureidentität von mindestens 40%, bevorzugt mindestens 60% oder mindestens 80% zu SEQ ID NO: 2.

Homologe der erfindungsgemäßen Lipasen aus anderen Basidiomyceten, insbesondere den hierin genannten Gattungen und Familien, lassen sich durch den Fachmann isolieren und auf ihre Aktivität, insbesondere bei der Herstellung von Käse mit einem gewünschten Aroma-Profil testen. Das gewünschte Aroma-Profil kann durch die Fettsäuren Capronsäure, Caprylsäure und Caprinsäure sowie an Buttersäure und Essigsäure und ein dadurch verliehenes bockiges Aroma charakterisiert sein, es kann jedoch auch ein anderes Profil gewünscht sein.

Ein Gegenstand der Erfindung ist auch ein Expressionsvektor, der eine erfindungsgemäße Lipase, z.B. aus *Flammulina velutipes* kodiert, wobei die kodierende Sequenz mit geeignetem Promotor für Expression in einer Wirtszelle funktionell gekoppelt ist. Gegenstand der Erfindung ist auch einen solchen Expressionsvektor umfassende transformierte Wirtszelle, wobei die Wirtszelle ausgewählt ist aus der Gruppe umfassend Bakterien, z.B. *E. coli* und Hefe, z.B. S. *cerevisiae* oder *P. pastoris.*

Ein anderer Gegenstand der Erfindung betrifft ein Verfahren zur Herstellung einer von Basidiomyceten abgeleiteten Lipase, das die folgenden Schritte umfasst:
a) Kultivieren der erfindungsgemäßen Wirtszelle, und
b) Isolieren der Lipase aus der Kultur.

Die vorliegende Erfindung betrifft auch einen Käse, welcher eine von einem Basidiomyceten abgeleitete Lipase umfasst, bevorzugt eine erfindungsgemäß beschriebene Lipase, z.B. aus *Flammulina velutipes* oder *Pleurotus citrinopileatus.* Es wird auch ein Käse zur Verfügung gestellt, erhältlich durch ein erfindungsgemäßes Verfahren, wobei der Käse bevorzugt freie Fettsäuren aus der Gruppe bestehend aus Capronsäure, Caprylsäure und Caprinsäure sowie Buttersäure und Essigsäure und optional eine von einem Basidiomyceten abgeleitete Lipase umfasst.

Bevorzugt kann der Käse nach angemessener Reifung (z.B. 30 Tage bei 13 °C und 8-12 Wochen, insbesondere 12 Wochen bei 4 °C) per GC/MS/MS nachweisbare Mengen an Capronsäure, Caprylsäure und Caprinsäure sowie an Buttersäure und Essigsäure umfassen.

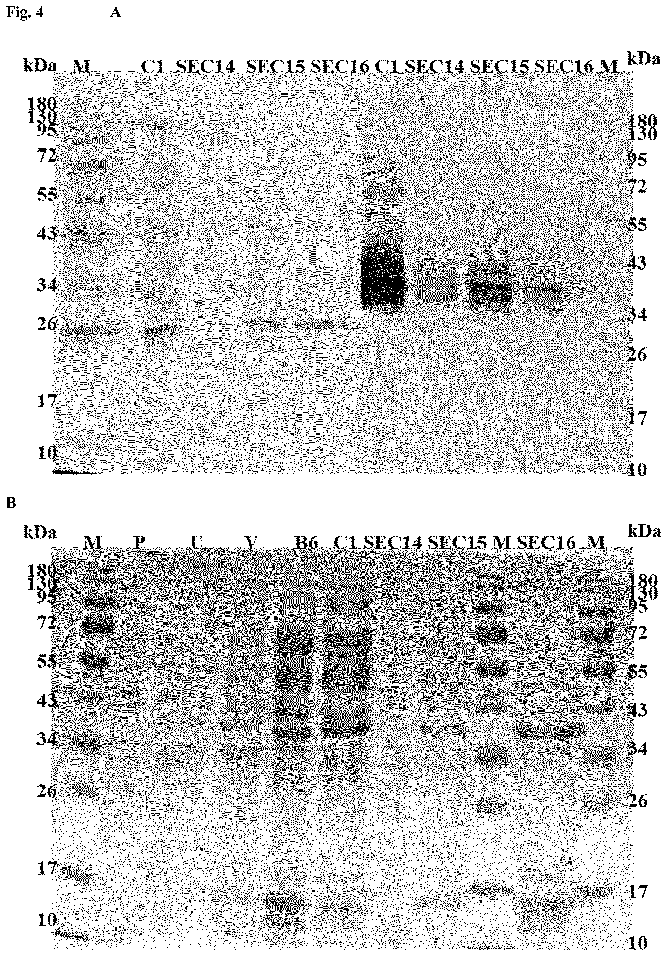

In einer Ausführungsform umfasst der Käse, hergestellt mit der Lipase aus *Pleurotus citrinopileatus,* dabei mehr Caprylsäure als Capronsäure und Caprinsäure, wobei die Mengen an Capronsäure und Caprinsäure ungefähr gleich sind (+/-10%). Dabei ist die Menge an Essigsäure bevorzugt 50-90% geringer als die Menge an Buttersäure. Bevorzugt ergibt sich im SPME-GC-MS/MS-Chromatogramm ein Chromatogramm entsprechend Fig. 4B-E).

In einer Ausführungsform umfasst der Käse, hergestellt mit der Lipase aus *Flammulina velutipes,* dabei mehr Capronsäure als Caprylsäure und Caprinsäure, wobei die Menge an Caprinsäure größer ist als die an Capronsäure. Dabei ist die Menge an Essigsäure 0-50% geringer als die Menge an Buttersäure. Bevorzugt ergibt sich im SPME-GC-MS/MS-Chromatogramm ein Chromatogramm entsprechend Fig. 4B-E).

### LEGENDE

**Fig. 1** zeigt die im Kulturüberstand von *Pleurotus citrinopileatus* Kulturen gemessenen Esterase-/Lipase-Aktivitäten zu den angegebenen Zeitpunkten bei Kultur in MEP-Medium (**A**), in MEP-Medium mit 0,5% Butterschmalz (**B**) und MEP-Medium mit 0,5% Fett aus Quark (C). Substrate para-Nitrophenylacetat (pNPA), -butyrat (pNPB), -valerat (pNPV), -hexanoat (pNPH), -octanoat (pNPO) und -palmitat (pNPP)
**Fig. 2** zeigt die gemessene Esterase-Aktivität im Kulturüberstand vor Aufreinigung und die Esterase-Aktivität der aus den Kulturen von *Flammulina velutipes* (**A**) und *Pleurotus citrinopileatus* (**B**) hergestellten Lipase zur Verwendung in der Käseherstellung
**Fig. 3** zeigt die Esterase-Aktivitäten verschiedener FPLC-Fraktionen des Kulturüberstandes von *Flammulina velutipes* nach der ersten Aufreinigungsstufe mittels DEAE-FF (**A**) und nach der zweiten Aufreinigungsstufe von Fraktion C1 mittels SEC (**B**)
**Fig. 4** zeigt die SDS-PAGE Analyse verschiedener Fraktionen von *Flammulina velutipes* nach Aufreinigung mit FPLC.
   (**A**) Halbnative SDS-PAGE (Marker (M), Fraktion C1 nach DEAE-FF (C1), Fraktion 14 nach SEC (SEC14), Fraktion 15 nach SEC (SEC15) und Fraktion 16 nach SEC (SEC16); Coomassie-Färbung links; Esterase-Färbung rechts).
   (**B**) Denaturierende SDS-PAGE (Marker (M), Pellet (P), Ultrasette (U), Konzentrat nach Vivaflow (V), Fraktion B6 nach DEAE-FF (B6), Fraktion C1 nach DEAE-FF (C1), Fraktion 14 nach SEC (SEC14), Fraktion 15 nach SEC (SEC15) und Fraktion 16 nach SEC (SEC16); Coomassie-Färbung)

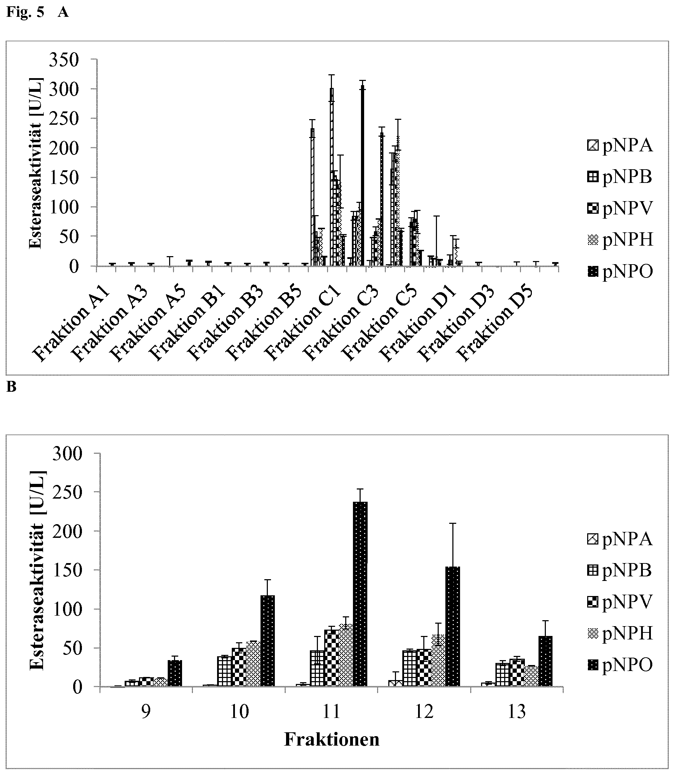

**Fig. 5** zeigt die Esterase-Aktivitäten verschiedener FPLC-Fraktionen des Kulturüberstandes von *Pleurotus citrinopileatus* nach der ersten Aufreinigungsstufe mittels DEAE-FF (**A**) und nach der zweiten Aufreinigungsstufe von Fraktion C2 und C3 mittels SEC (**B**).

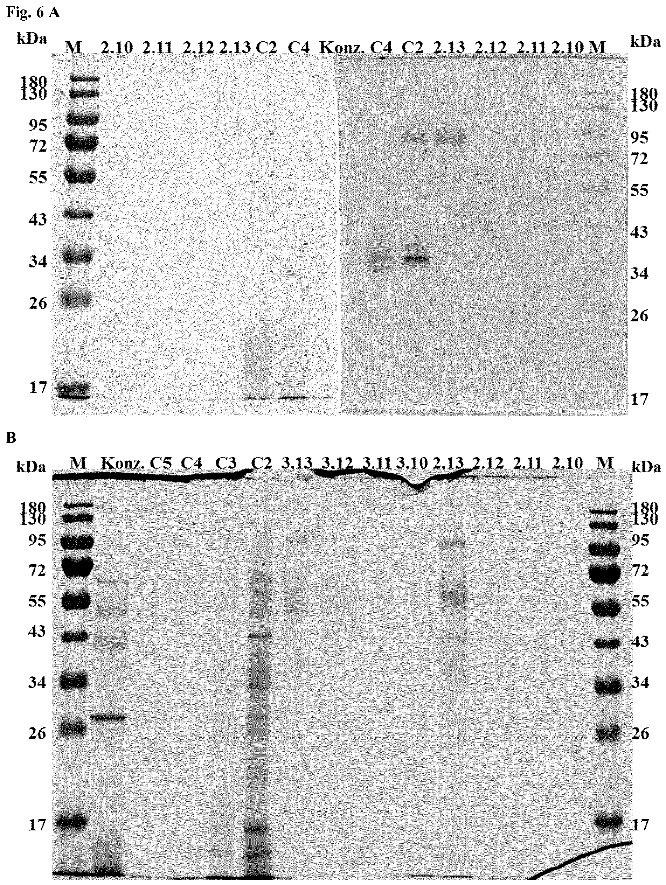

**Fig. 6** zeigt die SDS-PAGE Analyse verschiedener Fraktionen von *P. citrinopileatus* nach Aufreinigung mit FPLC.
   (**A**) Halbnative SDS-PAGE (Marker (M), Fraktion 10 nach SEC (2.10), Fraktion 11 nach SEC (2.11), Fraktion 12 nach SEC (2.12), Fraktion 13 nach SEC (2.13), Fraktion C2 nach DEAE-FF (C2), Fraktion C4 nach DEAE-FF (C4) und Konzentrat nach Vivaflow (Konz.); Coomassie-Färbung links und Esterase-Färbung rechts).
   (**B**) Denaturierende SDS-PAGE (Marker (M), Konzentrat nach Vivaflow (Konz.), Fraktion C5 nach DEAE-FF (C5), C4 nach DEAE-FF (C4), C3 nach DEAE-FF (C3), C2 nach DEAE-FF (C2), Fraktion 13 (3.13 nach SEC von C3), Fraktion 12 (3.12 nach SEC von C3), Fraktion 11 (3.11 nach SEC von C3) und Fraktion 10 (3.10 nach SEC von C3), Fraktion 13 (2.13 nach SEC von C2), Fraktion 12 (2.12 nach SEC von C2), Fraktion 11 (2.11 nach SEC von C2) und Fraktion 10 (2.10 nach SEC von C2), Marker (M); Coomassie-Färbung)

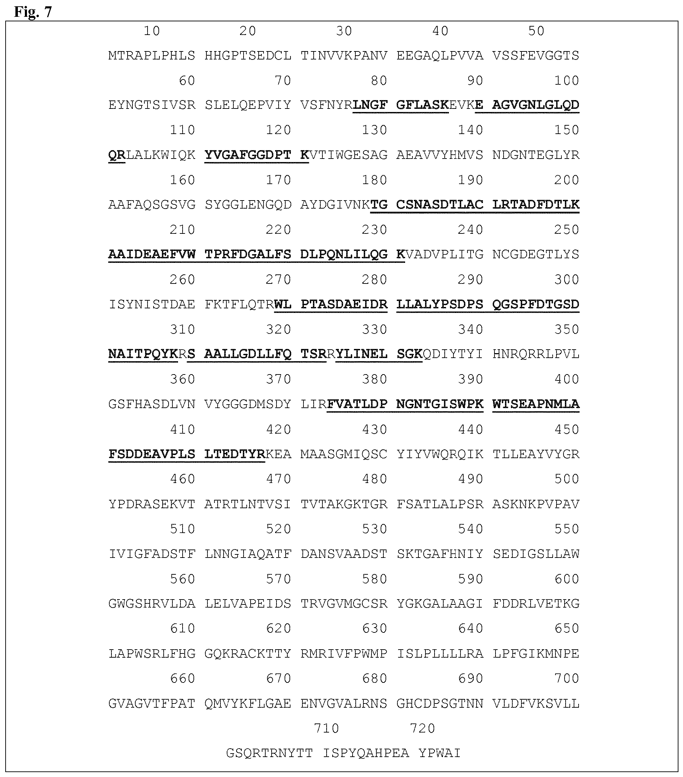

**Fig. 7** zeigt die Peptidsequenz einer *Putative carotenoid ester lipase* (UniProt Zugriffsnummer G8A515) *aus F. velutipes* (SEQ ID NO: 1). Gefundene ESI-MS/MS Peptidfragmente sind unterstrichen und fettgedruckt dargestellt.

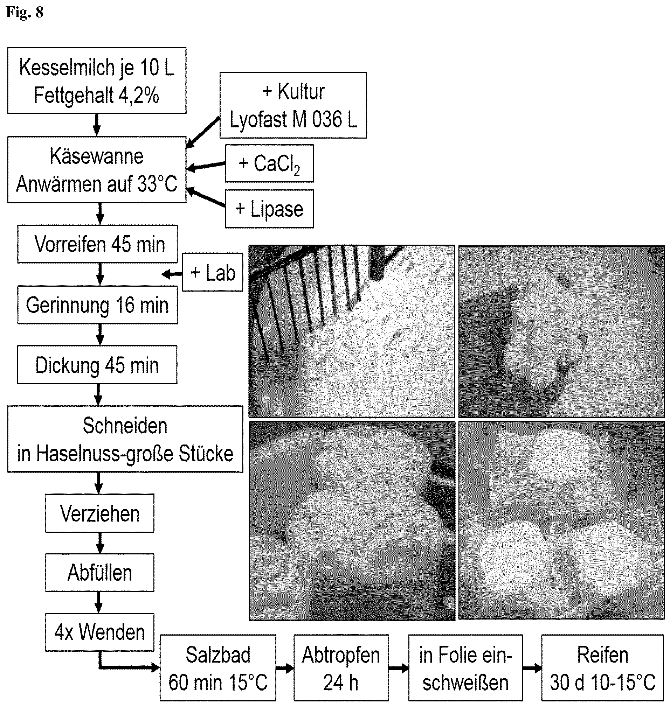

**Fig. 8** zeigt einen beispielhaften Ablauf eines erfindungsgemäßen Käsereiprozesses.

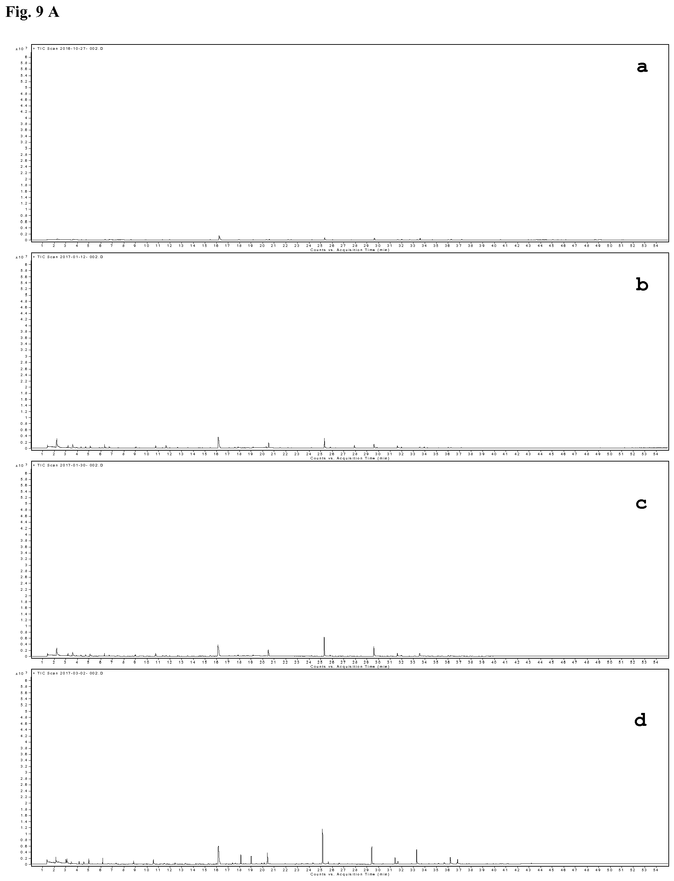

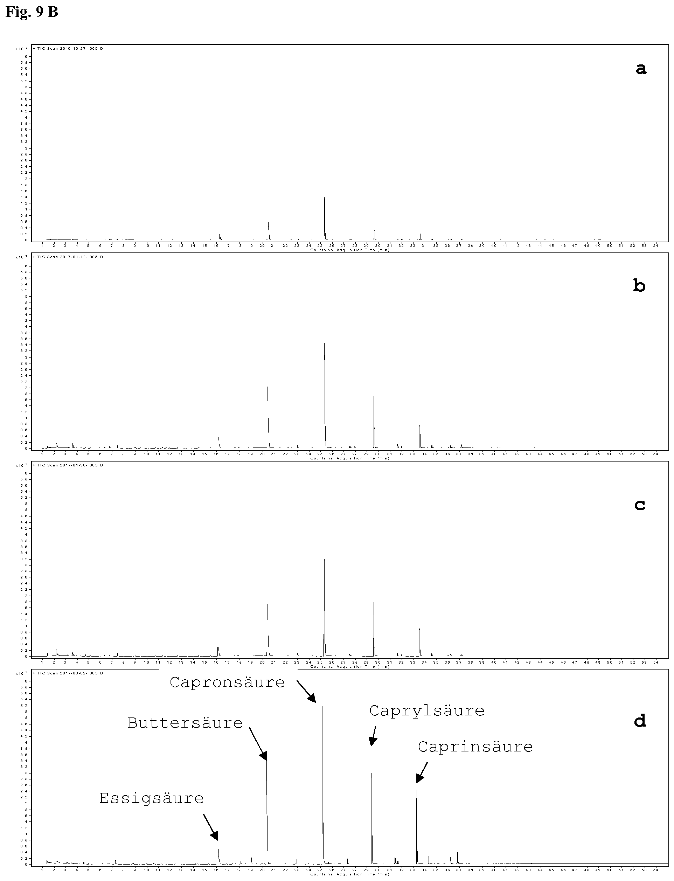

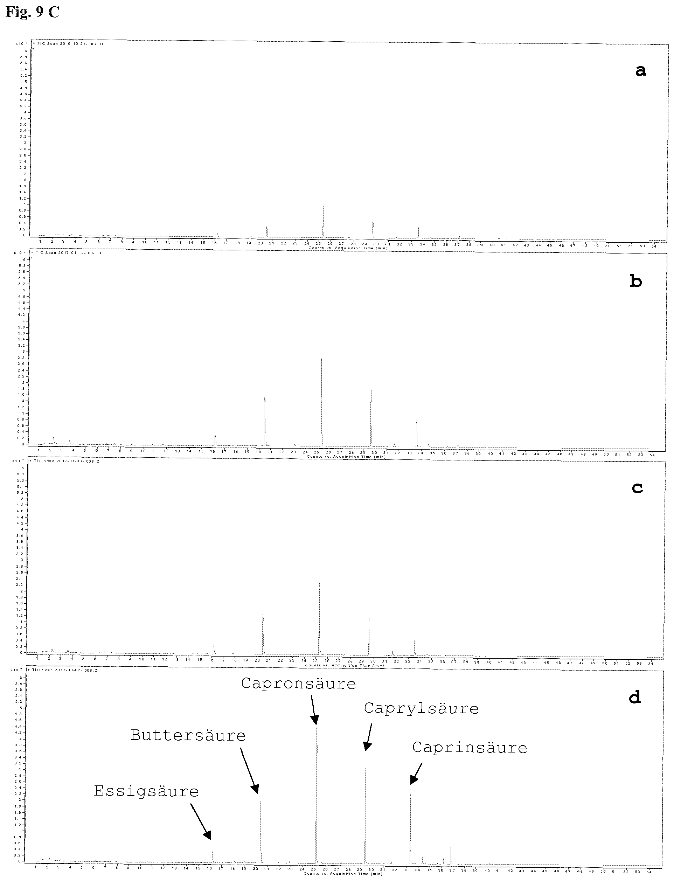

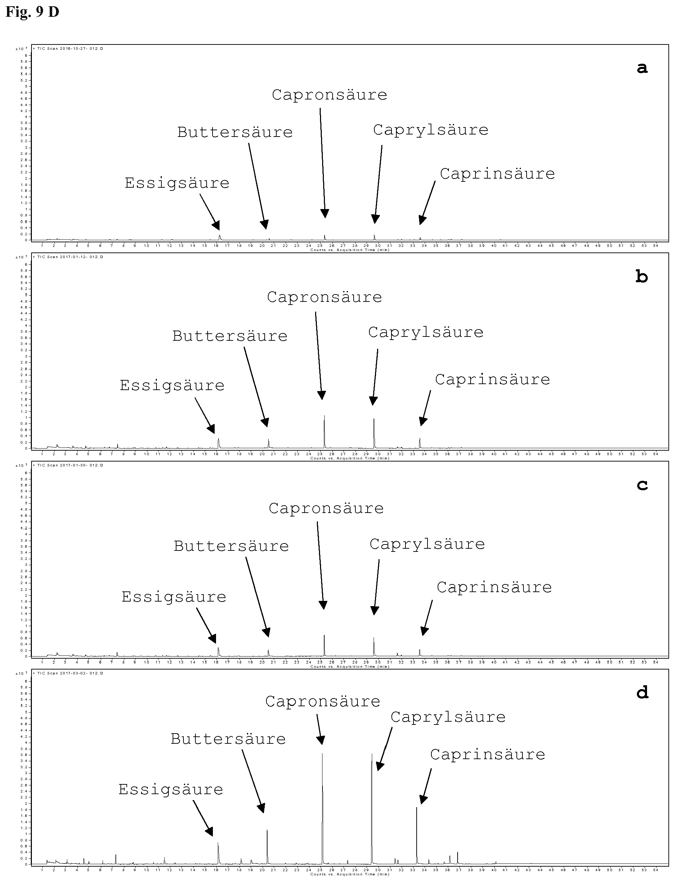

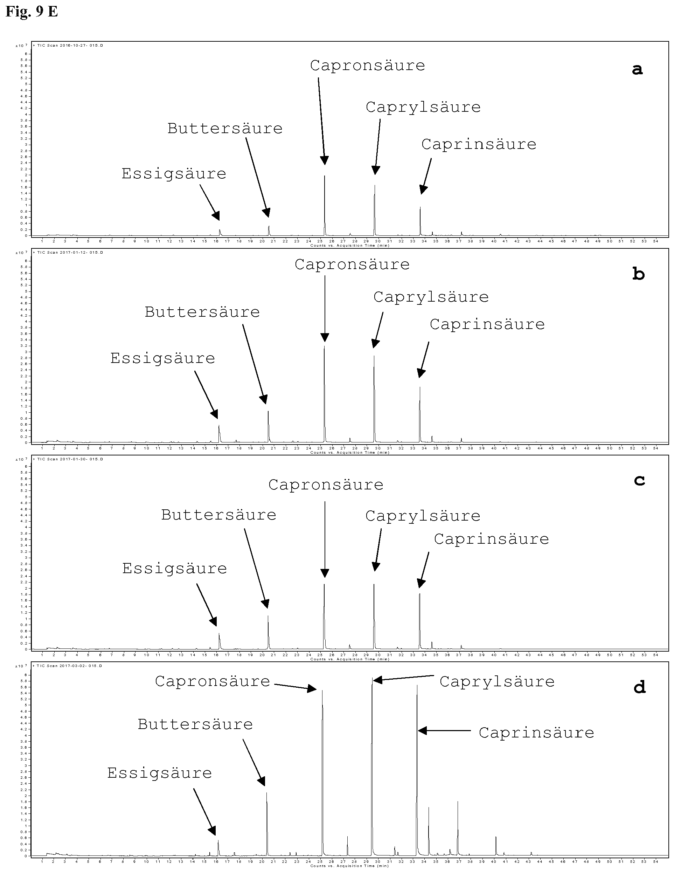

**Fig. 9** zeigt SPME-GC-MS/MS Chromatogramme von Testkäse-Proben nach Lagerung für 30 Tage bei 13 °C (a), für 30 Tage bei 13 °C + 4 Wochen bei 4 °C (b); für 30 Tage bei 13 °C + 8 Wochen bei 4 °C (c) und 30 Tage bei 13 °C + 12 Wochen bei 4 °C (d), hergestellt ohne Lipase **(A),** mit opti-zym z10uc **(B),** mit Piccantase **(C),** mit Lipase von *Flammulina velutipes* **(D)** und mit Lipase von *Pleurotus citrinopileatus* **(E).**

### BEISPIELE

### Beispiel 1: Kulturführung

### Stammhaltung

Die verwendeten Basidiomyceten-Pilzstämme wurden auf Malzextraktpepton-Agarplatten (MEPA) kultiviert. Zur Herstellung der Platten wurden die Medienbestandteile (Agar Agar 15 g, Malzextrakt 30 g, Sojaprotein 3 g) eingewogen, mit Reinstwasser ad 1 L aufgefüllt, mit 1 M NaOH auf pH 5,6 eingestellt und für 20 min bei 121 °C autoklaviert.

Auf die Agarplatten wurde mit einem sterilen Spatel mittig ein 1 cm² großes, homogen mit Pilzmycel bewachsenes Agarstück aufgesetzt, die Petrischale mit Parafilm verschlossen und bei 24 °C im Brutschrank inkubiert. Die zu ca. 80 % bewachsenen Agarplatten wurden anschließend bei 4 °C gelagert und regelmäßig nach gleichem Verfahren überimpft.

### Vorkultur

Für die Vorkulturführung wurde Malzextraktpepton-Medium verwendet. Dazu wurden die einzelnen Medienbestandteile (30 g Malzextrakt, 3 g Sojaprotein) eingewogen, mit 1 M NaOH auf pH 5,6 eingestellt und ad 1 L aufgefüllt. Je 100 mL des Mediums wurden in 250 mL Erlenmeyerkolben überführt und mit einem Cellulosestopfen sowie Alufolie verschlossen. Die Sterilisation der Medien erfolgte für 20 min bei 121 °C im Autoklaven.

Ein ca. 1 cm² großes, homogen bewachsenes Agarstück wurde mit Hilfe eines sterilen Spatels in 100 mL des Malzextraktpepton-Mediums überführt und mittels Ultra-Turrax-Dispergiergerät für 30 s bei 10.000 U*min⁻¹ homogenisiert. Die Vorkultur wurde unter Lichtausschluss bei 24 °C im Inkubationsschüttler (150 rpm) inkubiert. Die Vorkulturdauer erfolgte nach Beobachtung der Wachstumsdauer auf der MEPA-Agarplatte.

### Hauptkultur

Die Hauptkulturführung erfolgte in Malzextrakpepton-Nährmedium. Je 100 mL Medium wurden in 250 mL Erlenmeyerkolben überführt, mit einem Cellulosestopfen und Alufolie verschlossen und autoklaviert (20 min, 121 °C). Nach dem Homogenisieren der Vorkultur mittels Ultra-Turrax-Dispergiergerät (30 s, 10.000 U*min-1) wurden für die Hauptkultur jeweils 10 mL der Vorkultur (10% des Hauptkulturmediums) in einen der 250-mL-Erlenmeyerkolben überführt. Die Kulturen wurden auf einem Schüttler unter Lichtausschluss bei 24 °C und 150 rpm 21 Tage lang inkubiert.

### Probennahme

In regelmäßigen Abständen wurden steril Proben entnommen und die Esterase-/Lipase-Aktivität mittels photometrischer Assays bestimmt. Dazu wurde jeweils 1 mL Probe aus der Submerskultur entnommen und zentrifugiert (14.000 rpm, 18.000 g, 5 min, 4 °C). Der Überstand wurde abgetrennt und für die jeweiligen Assays eingesetzt.

### Kulturernte

Die Ernte der Submerskulturen erfolgte am Tag des Aktivitätsmaximums des jeweiligen Basidiomyceten mittels Filtration über einen Büchnertrichter; dabei wurde der Kulturüberstand in einer Saugflasche aufgefangen und bis zur Weiterverarbeitung bei -20 °C eingefroren. Das Myzel wurde verworfen.

### Optimierung der Medienzusammensetzung

Zur Optimierung der Enzymexpression wurden verschiedene Nährmedien getestet: Malzextraktpepton-Medium (MEP), Standardnährlösung (SNL) und Kartoffel-Glucose-Medium. Die verwendeten Stämme wiesen in den verschiedenen Medien Unterschiede im Wachstum sowie in der Färbung des Mediums auf. Anhand der ermittelten Esterase-/Lipase-Aktivitäten in den Kulturüberständen der verschiedenen Medien wurde das Malzextraktpepton-Medium als das am besten geeignete Medium ausgewählt.

### Zusatz geeigneter Induktoren zur Steigerung der Sekretion extrazellulärer Lipasen/Esterasen

Nachdem sich das Malzextraktpepton-Medium als geeignetes Nährmedium erwiesen hatte, wurden diesem Medium verschiedene Induktoren zur Steigerung der Sekretion extrazellulärer Lipasen zugesetzt. Bei den Induktoren handelte es sich um Fett aus Quark (extrahiert nach Weibull-Stoldt aus Speisequark: 50% Fett i. Tr.), Butterschmalz und Butter (deutsche Markenbutter, mild gesäuert) (Matissek et al. 2014).

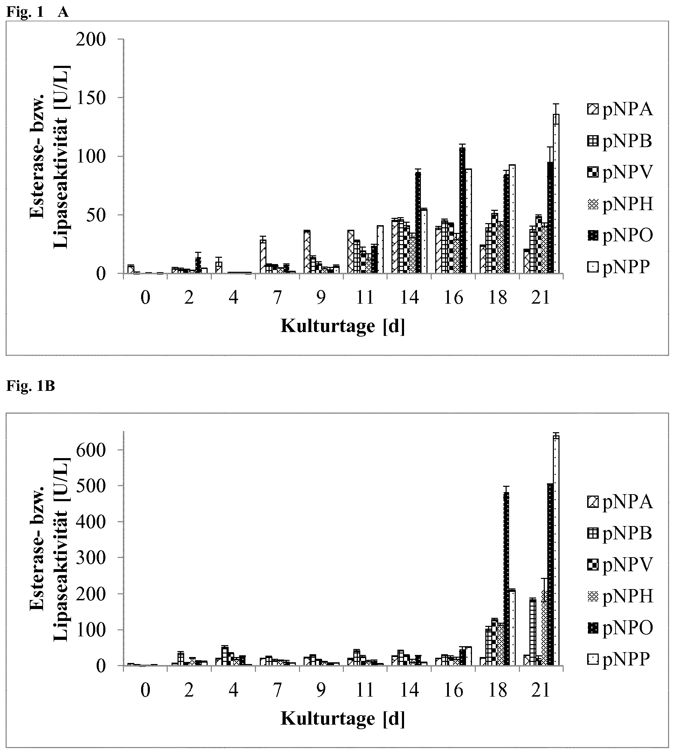

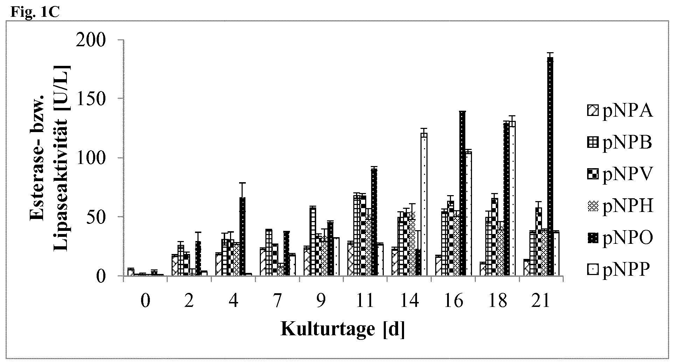

Die sekretierten Esterase-/Lipase-Aktivitäten wurden durch den Zusatz von Butterschmalz und Fett aus Quark signifikant gesteigert, insbesondere bei *Pleurotus citrinopileatus* (Fig. 1).

### Beispiel 2: Photometrische Enzymassays

Die Esteraseaktivität wurde mittels Esteraseassay nach Purdy und Kolattukudy, 1973 anhand der Umsetzung der fünf Substrate para-Nitrophenylacetat (pNPA), -butyrat (pNPB), -valerat (pNPV), - hexanoat (pNPH) und -octanoat (pNPO) bestimmt. Die Bestimmung der Lipaseaktivität erfolgte mit nach dem Lipaseassay nach Winkler und Stuckmann, 1979, mit dem Substrat p-Nitrophenylpalmitat (pNPP). Zur Bestimmung der Peptidaseaktivität wurde der Azocaseinassay nach Kilcawely et al. (2002) durchgeführt.

### Beispiel 3: Reinigung und Konzentrierung von Lipasepräparationen

### Proteinpräzipitation: Proteinfällung mit Ammoniumsulfat

Der jeweilige Kulturüberstand der verschiedenen Basidiomyceten wurde in ein Becherglas überführt und in einem Eisbad unter Rühren mit einer definierten Menge Ammoniumsulfat versetzt. Die Zugabe des Salzes erfolgte in regelmäßigen Abständen in kleinen Portionen. Sobald das Ammoniumsulfat vollständig in Lösung gegangen war, wurde bis zur Einstellung des Gleichgewichts für weitere 2 h gerührt. Anschließend wurden die gefällten Proteine abzentrifugiert (4.000 rpm, 3.283 g, 30 min, 4 °C). Das erhaltene Pellet wurde in einem definierten Volumen Reinstwasser bzw. Puffer aufgenommen und gelöst. Die eingestellte Ammoniumsulfatsättigung zur Proteinfällung betrug 60 % bei *Pleurotus citrinopileatus* und 70 % bei *Flammulina velutipes.*

### Konzentrierung

Zur Konzentrierung, Umpufferung und zum Entsalzen wurden dem Volumen entsprechend Macro-sep®- Microsep™- oder Nanosep®-Zentrifugationseinheiten (Pall, Dreieich) mit einer Ausschlussgröße (MWCO) von 10 kDa eingesetzt. Vor der ersten Verwendung wurden die Zentrifugationseinheiten jeweils dreimal mit Reinstwasser konditioniert, indem sie bei 4 °C und 4.000 rpm (3.283 g) zentrifugiert wurden.

Bestandteile, die größer als 300 kDa sind wurden mittels Ultrasette™ Lab Tangentialflussfiltrationskassette aus dem Kulturüberstand abgetrennt (Membraneinheit: Omega™ Membran (modifiziertes Polyethersulfon mit geringer Proteinbindung), mit Polyolefinsubstrat, separiert und unterstützt durch Polyester Screen und/oder Suspended Screen Channel)

Die Konzentrierung großer Kulturvolumina erfolgte mittels Vivaflow-200-Einheit (MWCO 10 kDa) mit einer Polyethersulfon-Membran. Die Anwendung sowie die Reinigung der Membran erfolgten nach den Angaben des Herstellers.

### Fast Protein Liquid Chromatography (FPLC)

Die Reinigung der zuvor gefällten Proteine erfolgte über zwei Aufreinigmigsstufen mittels FPLC. Zur Zweistufenreinigung wurde die Ionenaustauschchromatographie (IEX) als erste Aufreinigungsstufe und die Größenausschlusschromatographie (SEC) als zweite Aufreinigungsstufe eingesetzt.

Als Laufmittel wurden zwei verschiedene Kaliumphosphatpuffer verwendet (Laufpuffer A, 50 mM, pH 7,0 und Laufpuffer B, 50 mM, pH 7,0 mit 1 M NaCl). Als Säule diente in einem ersten Reinigungsschritt eine Diethylaminoethyl Sepharose *Fast Flow* Säule (DEAE-FF). Dabei handelt es sich um einen schwachen Anionenaustauscher. In einem zweiten Reinigungsschritt wurden die aktivsten Fraktionen der DEAE-FF-Säule konzentriert und umgepuffert (s. 1.4.2) und mittels einer Größenausschlusschromatographie (SEC) gereinigt. Als Laufmittel wurde ein Kaliumphosphatpuffer (50 mM, pH 7,0 mit 0,15 M NaCl) eingesetzt. Die Proteinkonzentration sowie die Esterase- bzw. Lipaseaktivität in den einzelnen gesammelten Fraktionen wurden mittels Bradford- und Esterase- bzw. Lipase-Assay nachgewiesen.

### Anionenaustauschchromatographie (IEX)

Sowohl die mittels fraktionierter Ammoniumsulfatfällung erhaltenen Proteine als auch die direkt eingesetzten, konzentrierten und umgepufferten Kulturüberstände wurden einer Proteinaufreinigung mittels FPLC-IEX unterzogen (Tabelle 1). Für die anfänglichen Versuche wurden Tris-HCl-Puffer verwendet, insbesondere zur Gewinnung der Enzympräparate für die Käseherstellung wurden Kaliumphosphatpuffer eingesetzt.

**Tabelle 1: Standardparameter für die Proteinreinigung mittels Ionenaustauschchromatographie**

| **Ionenaustauschchromatographie** | |
|---|---|
| **FPLC** | NGC Chromatographie System |
| **Säule** | XK 26 (GE Healthcare Life Sciences, Freiburg) |
| **Säulenmaterial** | DEAE-FF (Diethylaminoethyl Sepharose *Fast Flow*) |
| **Säulenvolumen** | 20 mL/175 mL/140 mL (neu gepackte Säule) |
| **Startpuffer (A)** | 50 mM Tris-HCl-Puffer pH 7,0 bzw. |
| | 50 mM Kaliumphosphatpuffer pH 7,0 |
| **Elutionsspuffer (B)** | 50 mM Tris-HCl-Puffer mit 1 M NaCl, pH 7,0 bzw. |
| | 50 mM Kaliumphosphatpuffer mit 1 M NaCl, pH 7,0 |
| **Flussrate** | 2 - 4 mL min⁻¹ |
| **Programm** | Probenaufgabe |
| | Elution: |
| | 1 SV: 100% A, 0% B |
| | 2 SV: 100% A bis 0% A, |
| | 0% B bis 100% B |
| | 1 SV: 0% A, 100% B |
| | 2 SV: 100% A, 0% B |
| **Detektion** | UV-Detektor |
| **Wellenlänge** | 280 nm |
| **Proben** | Kulturüberstand (nach Ammoniumusulfatfällung, konzentriert und auf den Startpuffer umgepuffert) |
| **Probenaufgabe** | über Pumpe A (Position 4) |
| **Probenvolumen** | 10 mL bzw. 90 mL |
| **Fraktionsanzahl** | 55 bzw. 24 |
| **Fraktionsgröße** | 30 mL |

### Größenausschlusschromatographie (SEC)

Die vereinigten und konzentrierten IEX-Fraktionen wurden mittels FPLC-SEC weiter gereinigt (Tabelle 2).

**Tabelle 2: Standardparameter für die Proteinreinigung mittels FPLC-SEC (SV: Säulenvolumen)**

| **Größenausschlusschromatographie** | |
|---|---|
| **FPLC** | Biologic Duo Flow |
| **Säule** | HiLoad 16/60 Superdex 200 pg (GE Healthcare Life Sciences, Freiburg) |
| **Säulenmaterial** | quervernetzte Agarose + Dextran |
| **Säulenvolumen** | 24 mL bzw. 120 mL |
| **Elutionspuffer** | 50 mM Kaliumphosphatpuffer mit 0,15 M NaCl, pH 7,0 |
| **Flussrate** | 0,8 mL min⁻¹ |
| **Programm** | Elution: 2 SV |
| **Detektion** | UV-Detektor |
| **Wellenlänge** | 280 nm |
| **Proben** | aktivste Fraktionen der 1. Reinigungsstufe (konzentriert und auf den Startpuffer umgepuffert) |
| **Probenaufgabe** | 100 µL bzw. 1 mL-Probenschleife |
| **Probenvolumen** | 100 µL - 1 mL (gesamtes Probenkonzentrat) |
| **Fraktionsanzahl** | 38 bzw. 62 |
| **Fraktionsgröße** | 1 mL bzw. 4 mL |

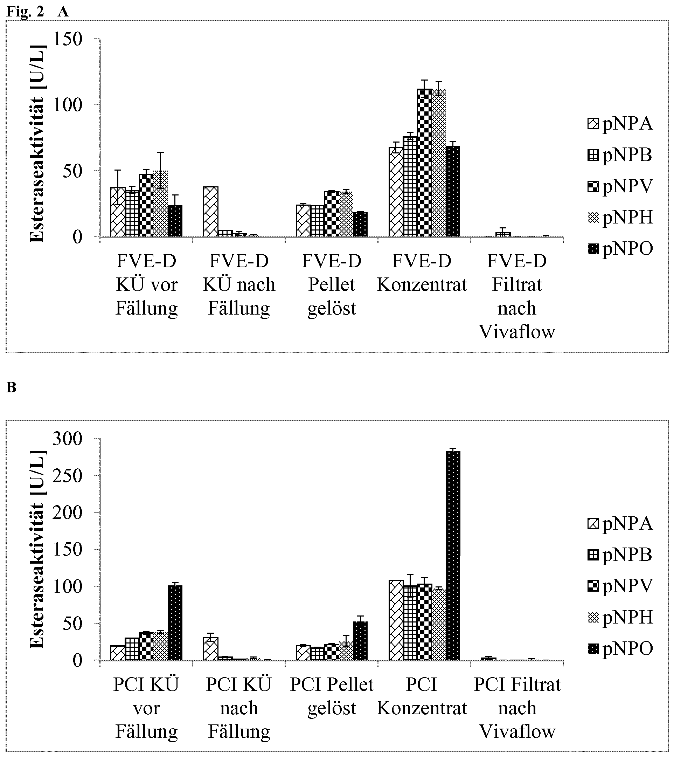

Die Esteraseaktivität im Kulturüberstand wurde mit der Esteraseaktivität in dem hergestellten Lipase - Konzentrat beim Einsatz in der Käseherstellung verglichen. Durch den erfindungsgemäßen Prozess, konnte die Esteraseaktivität im Lipasekonzentrat im Vergleich zur Aktivität im Kulturüberstand erheblich gesteigert werden (Fig. 2).

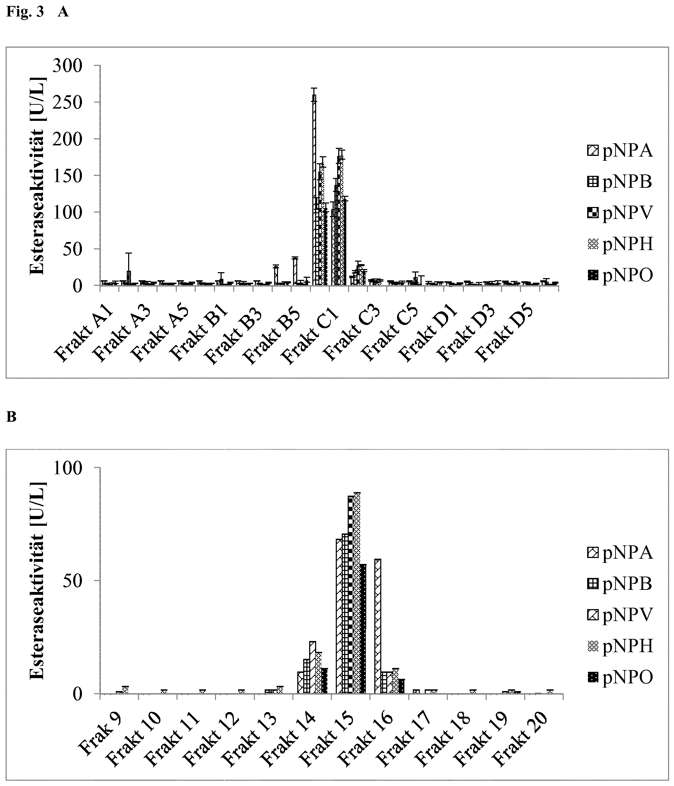

Außerdem wurde die Esteraseaktivität in einzelnen Fraktionen nach der ersten Aufreinigungsstufe mittels schwachem Anionenaustauscher sowie nach der zweiten Aufreinigungsstufe mittels SEC bestimmt. Signifikante Esteraseaktivität wurde bei *Flammulina velutipes* in Fraktion C1 nach der ersten Aufreinigungsstufe (AEX) und in den Fraktionen 14-16 nach der zweiten Aufreinigungsstufe (SEC) detektiert (Fig. 3). Signifikante Esteraseaktivität wurde bei *Pleurotus citrinopileatus* in den Fraktionen B6-C5 nach der ersten Aufreinigungsstufe (AEX) und in den Fraktionen 10-13 nach der zweiten Aufreinigungsstufe (SEC) detektiert (Fig. 5).

### Beispiel 4: Elektrophoretische Methoden

Fraktionen von *Flammulina velutipes* und *Pleurotus citrinopileatus* nach Aufreinigung mit FPLC wurden zur Charakterisierung der Esterasen/Lipasen mittels halbnativer und denaturierender SDS-PAGE analysiert (Fig. 4/6).

### Probenvorbereitung

Zum Konzentrieren, Entsalzen und Umpuffern der FPLC-Fraktionen wurden diese zunächst mit Hilfe von Amicon Ultra-0,5-Centrifugal Filter Devices 10K nach den Angaben des Herstellers konzentriert und umgepuffert.

### Natriumdodecylsufat-Polyacrylamid-Gelelektrophorese (SDS-PAGE)

Zur SDS-PAGE wurden Gele bestehend aus Sammel- und Trenngel gegossen (Tabelle 3). Die Acrylamid-Konzentration betrug im Sammelgel 6% und im Trenngel 12%. Gele der halbnativen und denaturierenden SDS-PAGE unterschieden sich in der Zusammensetzung von Lower Tris- und Upper Tris-Puffer.

**Tabelle 3a: Zusammensetzung des Sammelgels und Trenngels**

| **Chemikalie** | **Sammelgel (6%)** | **Trenngel (12%)** |
|---|---|---|
| H₂O | 1,8 mL | 2,7 mL |
| Upper Tris (pH=6,8) | 750 µL | - |
| Lower Tris (pH=8,8) | - | 1,5 mL |
| Rotiphoerese® Gel 40 | 450 µL | 1,8 mL |
| APS | 10 µL | 15 µL |
| TEMED | 4 µL | 7,5 µL |

### Denaturierende SDS-PAGE

15 µL Probe wurden vor der Auftragung mit 5 µL eines denaturierenden Probenauftragspuffer und 3 µL einer 1 M DTT-Lösung versetzt und für 10 min im siedenden Wasserbad denaturiert. Anschließend wurden die Proben auf Eis abgekühlt und in die Geltaschen pipettiert. Als Marker wurden 10 µL des "PageRuler Unstained Protein Ladder" der Firma Life Technologies GmbH verwendet.

### Halbnative SDS-PAGE

Im Gegensatz zur denaturierenden SDS-PAGE wurden die Proben für die halbnative SDS-PAGE nicht in einem siedenden Wasserbad denaturiert, außerdem wurden die Proben nicht mit DTT versetzt und es wurde ein halbnativer Probenauftragspuffer eingesetzt. Die Trennung erfolgte analog zur denaturierenden SDS-PAGE.

**Tabelle 3b: Zusammensetzung des Probenauftragspuffers**

| **Chemikalie** | **Menge (halbnativ)** | **Menge (denaturierend)** |
|---|---|---|
| 1 M Tris-HCl, pH = 6,8 | 1,0 mL | 1,0 mL |
| SDS-Lösung (20%) | 1,0 mL | 2,0 mL |
| Bromphenolblau | 20,0 mg | 20,0 mg |
| Glycerol | 2,2 mL | 2,2 mL |
| Wasser (reinst) | ad 8,0 mL | ad 8,0 mL |

### Gelfärbung

Denaturierende SDS-PAGE-Gele wurden mittels kolloidalem Coomassie bzw. Coomassie-Färbelösung gefärbt. Halbnative SDS-PAGE-Gele und IEF-Gele wurde in zwei Teile geteilt, um sowohl eine Färbung mit kolloidalem Coomassie bzw. Coomassie-Färbelösung als auch eine Esteraseaktivitätsfärbung durchführen zu können.

### Färbung mit kolloidalem Coomassie

Zur Färbung der Proteinbanden wurde das Gel in eine kolloidale Coomassie-Färbelösung gelegt. Während SDS-Gele über Nacht auf dem Orbitalschüttler inkubiert wurden, war zur Färbung der IEF-Gele eine Inkubation von 30 min ausreichend.

### Esteraseaktivitätsfärbung

Für die Aktivitätsfärbung wurden zwei Färbelösungen benötigt, welche getrennt voneinander hergestellt und auf Eis gelagert wurden (Tabelle 4). Das Gel wurde zunächst in Lösung 1 gelegt und sofort mit Lösung 2 überdeckt. Anschließend folgte die Färbung für maximal 30 min auf einem Orbitalschüttler bei 20 rpm. Um jegliche Reste der Färbereagenzien zu entfernen, wurden die Gele vor der Dokumentation in Wasser (reinst) gelegt.

**Tabelle 4: Lösungen zur Esteraseaktivitätsfärbung**

| | **Substanz** | **Menge** |
|---|---|---|
| Lösung 1 | *Fast Blue RR* | 50 mg in 100 mL Kaliumphosphatpuffer (80 mM, pH7,0) |
| Lösung 2 | *α*-Naphthylbutyrat | 10 mg in 1 mL Aceton |

### Beispiel 5: Sequenzierung der Proteinfraktionen 14-16 der FPLC

Die aus dem Kulturüberstand des Basidiomyceten *Flammulina velutipes* mittels FPLC gereinigten Fraktionen 14-16 mit detektierter Esteraseaktivität (Fig. 3) wurden nach Verdau mit Trypsin mittels LC-ESI-MS/MS) sequenziert.

In Tabelle 5 sind die gefundenen Peptidfragmente der einzelnen Fraktionen aufgeführt.

**Tabelle 5: Gefundene Peptidfragmente der LC-ESI-MS/MS-Analyse der einzelnen Fraktionen**

| Peptid Fragment | Fraktion 14 | Fraktion 15 | Fraktion 16 |
|---|---|---|---|
| AAIDEAEFVWTPR (SEQ ID NO: 3) | - | x | x |
| TGCSNASDTLACLR (SEQ ID NO: 4) | - | x | x |
| EAGVGNLGLQDQR (SEQ ID NO: 5) | - | x | x |
| TADFDTLK (SEQ ID NO: 6) | - | - | x |
| YVGAFGGDPTK(SEQ ID NO: 7) | - | x | x |
| FDGALFSDLPQNLILQGK(SEQ ID NO: 8) | - | x | x |
| LLALYPSDPSQGSPFDTGSDNAITPQYK(SEQ ID NO: 9) | - | x | - |
| FVATLDPNGNTGISWPK(SEQ ID NO: 10) | - | x | - |
| SAALLGDLLFQTSR(SEQ ID NO: 11) | - | x | - |
| YLINELSGK(SEQ ID NO: 12) | - | x | - |
| WLPTASDAEIDR(SEQ ID NO: 13) | - | x | - |

Der Datenbankvergleich ergab Übereinstimmungen mit einer *Putative carotenoid ester lipase* aus Flammulina velutipes (UniProt Zugriffsnummer G8A515). Die Peptidsequenz dieser *Putative carotenoid ester lipase* aus *Flammulina velutipes* ist in Fig. 7 dargestellt (SEQ ID NO: 1), dabei sind die gefundenen Peptidfragmente der LC-ESI-MS/MS-Analyse unterstrichen und fettgedruckt dargestellt.

### Beispiel 6: Käseherstellung

Insgesamt wurden jeweils bis zu sechs verschiedene Testkäse der Käsesorte Salzlakenkäse vom Typ Käse griechischer Art hergestellt. Dazu wurde zur Herstellung von Käsereimilch frische Vollmilch (Stich Feinkäserei GmbH, frische Vollmilch, 3,5% Fett, pasteurisiert, homogenisiert) mit Sahne auf einen Fettgehalt von 4,2% eingestellt und ein definiertes Volumen in Versuchswannen überführt und auf 33 °C temperiert.

Daraufhin erfolgte die Zugabe der Milchsäurebakterien-Kultur (mesophile Direktstarterkultur vom Typ Lyofast M036L, Sacco Srl.), sowie die Zugabe der entsprechenden Lipase. Anschließend begann die Vorreifezeit für insgesamt 45 min. Nach Ablauf der Vorreifezeit wurden versetzt in Zeitabständen von 5 min Calcium (opti-calc, optiferm GmbH) und Lab (Mikrolab: opti-lase, optiferm GmbH) zu den einzelnen Versuchswannen hinzugefügt. Darauf folgten die Gerinnungszeit sowie die Dickungszeit.

Als Referenz diente eine Produktion ohne Zugabe von Lipasen ("blank") und je ein Standard mit 0,1 g Ziegenlipase opti-zym z10uc (entsprechend einer durchschnittlichen Praxisdosierung von 3,5 g auf 100 L Milch) und mit 0,1 g Piccantase® KLC (DSM Nutritional Products GmbH), einer kommerziell erhältlichen rekombinanten Kälberlipase.

Nach der Dicklegung der Milch folgte das Schneiden der Gallerte mit Käseharfen in ca. Haselnuss-große Bruchstücke. Der Bruch wurde in regelmäßigen Abständen mit der Hand verzogen und nach dem Austritt der Molke in entsprechende, vorgewärmte Formen überführt. Die Formen wurden zum gleichmäßigen Austreten der Molke in regelmäßigen Abständen gewendet. Anschließend erfolgte das Einlegen der Käse in ein Salzbad (20%ig, pH 5,2 eingestellt mit 80% Milchsäure) sowie das Abtropfen. Nach 24 h wurden die Proben geviertelt und in Folie eingeschweißt. Die Reifezeit betrug 30 d bei 13 °C, anschließend wurden die Proben für weitere 12 Wochen bei 4 °C gelagert.

**Tabelle 10: Übersicht der Verfahrensschritte bei der Feta-Herstellung im Technikumsmaßstab**

| **Zeitablauf** | **Verfahrensschritt** | **Prozessparameter** | **Richtwert** |
|---|---|---|---|
| | Wärmetausch | Milch temperieren | 33°C |
| | Vereinigen, Mischen | Zugabe: Starterkultur Lyofast M 036 L, optional Lipase (z.B. opti-zym z10uc oder Test-Lipase), CaCl₂ | 1 UC/100 L |
| | | | 3,5 g/100 L |
| | | | 1:10.000 |
| | Verweilen | Vorreifen | 45 min |
| 0 min | Vereinigen, Mischen | Zugabe: Mikrolab | 220 IMCU |
| | | | 17 mL/100 L |
| 16 min | Verfestigung | Gerinnungszeit | |
| 45 min | Verfestigung | Labgerinnung | |
| 45 min | Zerkleinern | Schneiden der Gallerte in Würfel | Kantenlänge 20 - 30 mm |
| 50 min/ 60 min | Umschichten | Verziehen der Bruch-Würfel | im 10 min Takt |
| 70 min/ 80 min | | | |
| 90 min | Vereinigen, Abtrennen | Wasserzugabe Schöpfen Abfüllen der Bruch-Würfel in Formen | 1 L mit 48°C |
| 10 min/ 60 min | Formgebung Wenden | Absitzenlassen Zusammenwachsen des Bruchs | |
| 120 min/ 240 min | | | |
| 24 h | Abtropfen | Oberflächenabtrocknung | über Nacht |
| Tag 2 | Stoffaustausch | Salzbad | 50 min |
| | | | 20°Baumé |
| | | | 15°C |
| Tag 2 | Abtropfen | Oberflächenabtrocknung | |
| Tag 2 | Verpacken | Vakuumverpacken | |
| 30 Tage | Proteolyse, Lipolyse, Lagerung | Reifen | bei 10 - 15°C |

Über den Reifungs- und Lagerungszeitraum hinweg wurden die generierten Käsespezialitäten jeweils im Vergleich zu den Referenzprodukten ohne Zugabe von Lipasen, mit Ziegenlipase opti-zym z10uc und mit der rekombinanten Kälberlipase Piccantase® KLC (DSM Nutritional Products GmbH) sensorisch beurteilt.

Begleitend erfolgt eine umfassende instrumentell-analytische Charakterisierung der durch die Lipasen freigesetzten Fettsäuren. Die produzierten Käse wurden mittels Festphasenmikroextraktion (SPME) in Kopplung mit der gaschromatographischen Analyse mit massenspektrometrischer Detektion auf die Anwesenheit von freien Fettsäuren hin untersucht.

### Beispiel 7: Sensorische Beurteilung der hergestellten Testkäse

Nach einer Reifung von 30 Tagen bei 10 - 15 °C fand jeweils durch 3-10 Personen (Mitarbeiter der Firma optiferm GmbH und des Instituts für Lebensmittelchemie und -biotechnologie der JLU Gießen) eine umfassende optische und sensorische Beurteilung der hergestellten Proben, jeweils im Vergleich mit den Referenzprodukten, statt. Im Anschluss wurden die Proben bei 4 °C eingelagert und erneut nach zusätzlichen 4, 8 und 12 Wochen Lagerung verkostet.

Die wahrgenommenen sensorischen Eindrücke wurden in Aussehen (Farbe), Geruch, Geschmack und Textur (Konsistenz) unterteilt.

Der Referenzkäse ohne Lipase wurde über die Dauer der Verkostungen insgesamt als geschmacklich neutral, rein und fehlerfrei bewertet.

Die mit opti-zym z10uc hergestellten Testkäse entwickelten den typischen Geruch und Geschmack nach Ziegenlipase vergleichbar mit dem pikanten Aroma eines Parmesans.

Die Piccantase®-Proben schnitten grundsätzlich schlechter ab als die mit opti-zym z10uc hergestellten Proben. Zwar entwickelten die mit Piccantase® hergestellten Proben ein dezentes, an Ziegenlipase erinnerndes Aroma, allerdings sehr viel weniger intensiv und über die Dauer weniger stabil. Umso länger die Lagerung bei 4°C andauerte, umso mehr bildete sich ein fehlerhafter Beigeschmack (leicht bitter/seifig) aus.

Die mit Lipasen aus *Flammulina velutipes* herstellten Testkäse wiesen einen neutralen bis leicht säuerlichen Geruch auf. Der Geschmack wurde als (leicht) würzig bewertet.

Die mit Lipasen aus *Pleurotus citrinopileatus* hergestellten Feta-Proben entwickelten einen ausgeprägten, intensiv würzigen Geruch, der sich mit zunehmender Reifedauer noch verstärkte. Dieser Geruch wurde als intensiv und den mit Ziegenlipase hergestellten Proben sehr ähnlich empfunden. Dieser würzig-pikante, mit dem von Ziegenlipase erzeugten Aroma vergleichbare Geruch der Proben spiegelte sich auch im Ergebnis der Fettsäure-Analyse wider (Fig 9). Geschmacklich wurden die *Pleurotus citrinopileatus* Proben ebenfalls als (leicht) würzig und vergleichbar mit den Ziegenlipase-Proben bewertet. Die Textur des Käses veränderte sich während der Lagerung über den Verkostungszeitraum von trocken zu cremig.

### Beispiel 8: Massenspektrometrische Analyse der freien Fettsäuren des Käses mittels SPME-GC-MS/MS

Die hergestellten Testkäse wurden nach unterschiedlichen Lagerperioden mittels Festphasenmikroextraktion (SPME) in Kopplung mit der gaschromatographischen Analyse mit massenspektrometrischer Detektion sowie mittels GC-MS auf die Anwesenheit von freien Fettsäuren untersucht. Die Extraktion wurde mittels einer Divinylbenzen/Polydimethylsiloxan-Faser aus dem Kopfraum des 20-mL Headspace-Vials durchgeführt. Dazu wurden jeweils 3 g Käse in ein 20 mL Headspace-Vial eingewogen und zur SPME-GC-MS/MSUntersuchung eingesetzt. Die Parameter sind in Tabelle 11 dargestellt.

Entsprechende SPME-GC-MS/MS-Chromatogramme sind in den Fig. 9 dargestellt.

Die Menge an den freien Fettsäuren Essigsäure, Buttersäure, Capronsäure, Caprylsäure und Caprinsäure nahem über den Lagerzeitraum zu. Testkäse, die ohne Lipase hergestellt wurden, wiesen im Gegensatz zu den Referenzprodukten mit Ziegenlipase opti-zym z10uc bzw. mit der rekombinantern Kälberlipase Piccantase® KLC nach 12 Wochen Lagerung sehr wenige freie Fettsäuren auf (Fig. 9A-C). Insgesamt waren die Menge und Art der freien Fettsäuren in den mit Lipasen aus *Flammulina velutipes* und *Pleurotus citrinopileatus* hergestellten Testkäse über den Lagerungszeitraum vergleichbar mit den Referenzen mit Piccantase und opti-zym, wobei es aber Unterschiede in den Mengenverhältnissen gab (Fig. 9D/E).

**Tabelle 11: Parameter der SPME-GC-MS/MS zur Analyse der freien Fettsäuren des Käses**

| **• SPME-GC-MS/MS-O** | |
|---|---|
| **• SPME: Faser** | • Supelco; DVB/PDMS (divinylbenzene/polydimethylsiloxane) |
| **• SPME: Temperaturprogramm** | • 55 °C (10 min); schütteln; 55 °C (40 min) |
| **• Gaschromatograph** | • 7890 GC System, Agilent Technologies |
| **• Injektor** | • Split/Splitless (ALS), 250 °C mit SPME-Liner |
| **• Split ratio** | • 50:1 bzw. ohne |
| **• Trennsäule** | • Agilent Technologies J&W Scientific VF-Waxms |
| | • 30 m Länge; 250 µm Durchmesser; |
| | • 0,25 µm Filmdicke |
| **• Trägergas** | • He |
| **• Fluss** | • 1,2 mL·min⁻¹ (konstant) |
| **• Temperaturprogramm** | • 40 °C (3 min); 5 °C·min⁻¹ auf 240 °C (12 min); insgesamt 55 min |
| **• Detektor** | • Agilent 5975 C MSD Triple-Axis Detektor |
| **• Temperaturen** | • Ionenquelle: 230 °C |
| | • Quadrupol: 150 °C |
| **• Ionisation** | • EI 70 eV |
| **• Massenbereich** | • Totalionenscan: m/z 33 bis 300 |
| **• Software** | • Chemstation E02.00.493 |
| **• Datenbank** | • NIST 2008 MS |

### Beispiel 9: Proteincharakterisierung mittels HPLC-ESI-MS/MS

Die drei mittels FPLC gereinigten Fraktionen von *Flammulina velutipes* mit detektierter Esteraseaktivität wurden nach Verdau mit Trypsin mittels LC-MS/MS mit Elektrospray-Ionisation (ESI) sequenziert.

### Proteinverdau aus den Fraktionen der FPLC

Für den Verdau der Proteine wurde die Proteinlösung zunächst mit RapiGest™ SF versetzt (auf 15 µg Protein etwa 10 µL). Die Lösung wurde für 20 min auf 80 °C erhitzt und anschließend auf Raumtemperatur abgekühlt. Daraufhin wurden 5 µL einer 10 mM DTT-Lösung dazugegeben, für 20 min auf 60 °C erhitzt und anschließend wieder auf Raumtemperatur abgekühlt. Im Anschluss wurden 5 µL einer 200 mM Iodacetamid-Lösung zugefügt und für 30 min bei Raumtemperatur unter Lichtausschluss inkubiert. Zuletzt wurden 1,5 µL Trypsin (1 µg µL⁻¹) dazugegeben und bei 37 °C über Nacht inkubiert. Am nächsten Tag wurden die Proteine mittels ZipTip®-Pipettenspitzen gereinigt und konzentriert.

### ZipTip® Pipettenspitzen zum Konzentrieren und Reinigen von Proben für die Massenspektrometrie

Zum Ansäuern der Probe wurde diese mit 1 µL Ameisensäure versetzt. Eine ZipTip®-Pipettenspitze wurde mit 10 µL Acetonitril (100%) benetzt (5-mal). Anschließend wurde die ZipTip®-Pipettenspitze mit 10 µL 0,1%iger TFA-Lösung equilibriert (5-mal). Die Säule wurde beladen: 10 µL der angesäuerten Analytlösung wurden 10-mal aufgezogen und in dasselbe Eppendorf-Cap wieder abgeben. Mit einer 0,1 %igen TFA-Lösung wurden Verunreinigungen von der Säule gespült (3-mal). Der Analyt wurde mit Acetonitril/H₂O (1:1) (1% FA) von der Säule eluiert (3-mal mit 5 µL) und in ein neues Eppendorf-Cap geben. Wiederholung der Prozedur (3mal): Die Pipettenspitze wurde dazu 5-mal mit 10 µL Acetonitril/H₂O (1:1) und 5-mal mit Acetonitril (100%) gespült und der Vorgang ab dem Equilibrieren der Säule mit 0,1%iger TFA-Lösung fortgeführt.

Die Proben wurden eingefroren und am nächsten Tag mittels Nano-ESI-MS/MS (Q Exactive, m/z 100-2000, R= 140000 @ m/z 200, MS/MS mittels HCD, 1.7 kV Spannung) analysiert.

### 1 Literaturverzeichnis

Kilcawley, K.N; Wilkinson, M.G; Fox, P.F (2002): Determination of key enzyme activities in commercial peptidase and lipase preparations from microbial or animal sources. In: Enzyme and Microbial Technology 31 (3), S. 310-320. DOI: 10.1016/S0141-0229(02)00136-9.
Matissek, Reinhard; Steiner, Gabriele; Fischer, Markus (2014): Lebensmittelanalytik. Berlin, Heidelberg: Springer Berlin Heidelberg.
Purdy, R. E.; Kolattukudy, P. E. (1973): Depolymerization of a hydroxy fatty acid biopolymer, cutin, by an extracellular enzyme from Fusarium solani f. pisi. Isolation and some properties of the enzyme. In: Archives of Biochemistry and Biophysics 159 (1), S. 61-69. DOI: 10.1016/0003-9861(73)90429-3.
Winkler, U. K.; Stuckmann, M. (1979): Glycogen, hyaluronate, and some other polysaccharides greatly enhance the formation of exolipase by Serratia marcescens. In: Journal of bacteriology 138 (3), S. 663-670.

## Patentansprüche

1. Verwendung einer von einem Basidiomyceten abgeleiteten Lipase zur Herstellung von Käse.

2. Verfahren zur Herstellung von Käse, umfassend das Einwirken einer von einem Basidiomyceten abgeleiteten Lipase auf ein Vorprodukt der Käseherstellung, bevorzugt auf Milch.

3. Verwendung nach Anspruch 1 oder Verfahren nach Anspruch 2, wobei der Käse ein Weichkäse, halbfester Schnittkäse, Schnittkäse oder Hartkäse ist,
wobei der Käse bevorzugt ein Salzlakenkäse, z.B. Feta, ist.

4. Verwendung nach Anspruch 1 oder 3 oder Verfahren nach Anspruch 2 oder 3, wobei der Basidiomycet ausgewählt ist aus der Gruppe umfassend *Flammulina spp., Pleurotus spp., Agrocybe spp., Armillaria spp., Auricularia spp., Clitocybe spp., Fistulina spp., Hericium spp., Hypholoma spp., Hypsizygus spp., Kuehneromyces spp., Laetiporus spp., Lactarius spp., Lentinula spp., Lentinus spp., Lycoperdon spp., Macrolepiota spp., Phallus spp., Piptoporus spp., Panellus spp., oder Polyporus spp.,*
bevorzugt ausgewählt aus der Gruppe umfassend *Flammulina velutipes, Pleurotus citrinopileatus, Agrocybe aegerita, Armillaria bulbosa, Armillaria gallica, Armillaria melea, Auricularia fuscosuccinea, Clitocybe geotropa, Fistulina hepatica, Hericium erinaceus, Hericium cirrhatum, Hericium coralloides, Hypholoma capnoides, Hypsizygus tessulatus, Kuehneromyces mutabilis, Laetiporus sulphureus, Lactarius deliciosus, Lentinula edodes, Lentinus squarrolusus, Lycoperdon pyriforme, Macrolepiota procera, Phallus impudicus, Piptopor us betulinus, Pleurotus eryngii, Pleurotus flabellatus, Pleurotus ostreatus, Panellus serotinus, oder Polyporus umbellatus,*
am meisten bevorzugt *Flammulina velutipes* oder *Pleurotus citrinopileatus.*

5. Verwendung nach Anspruch 1 oder 3-4 oder Verfahren nach Anspruch 2-4, wobei die Lipase aus einer Basidiomyceten-Kultur isoliert ist.

6. Verwendung nach Anspruch 1 oder 3-4 oder Verfahren nach Anspruch 2-4, wobei die Lipase unter Verwendung von gentechnisch veränderten Organismen ausgewählt aus der Gruppe umfassend Hefe und Bakterien, hergestellt wurde.

7. Verwendung nach Anspruch 1 oder 3-6 oder Verfahren nach Anspruch 2-6, wobei die Käseherstellung folgende Schritte umfasst:
a) Bereitstellen eines Käsevorprodukts, welches Käsereimilch umfasst,
b) Dicklegen des Käsevorprodukts, wobei Gallerte entsteht,
c) Schneiden der Gallerte,
d) Formen,
e) Salzen, und
f) Reifen,
wobei man ein Vorprodukt der Käseherstellung in einem der Schritte a, b, c oder d mit einer von einem Basidiomyceten abgeleiteten Lipase in Kontakt bringt, bevorzugt in Schritt b.

8. Verwendung nach Anspruch 1 oder 3-7 oder Verfahren nach Anspruch 2-7, wobei die Lipase bei der Käseherstellung ein Aroma erzeugt,
wobei das Aroma bevorzugt charakterisiert ist durch das Vorhandensein der freien Fettsäuren Essigsäure, Buttersäure, Capronsäure, Caprylsäure und Caprinsäure.

9. Verwendung nach Anspruch 1 oder 3-8 oder Verfahren nach Anspruch 2-8, wobei die Lipase in einer Endkonzentration von 70 -285 U/L bezogen auf Caprylat in 3 L Käsevorprodukt zugegeben wird.

10. Verwendung nach Anspruch 1 oder 3-9 oder Verfahren nach Anspruch 2-9,
wobei der Käse mit Milch ausgewählt aus der Gruppe umfassend Kuhmilch, Schafsmilch, Ziegenmilch, Büffelmilch und einer pflanzlichen Milch wie Sojamilch hergestellt wird und/oder
wobei die Milch einen Fettgehalt von mindestens 1,7 % (v/v), bevorzugt von mindestens 3,5 % (v/v) hat.

11. Verfahren zur Herstellung einer von einem Basidiomyceten abgeleiteten Lipase aus einer Basidiomyceten-Kultur, das die folgenden Schritte umfasst:
a) Kultur eines Basidiomyceten in einem Medium, bevorzugt Malzextraktpepton-Medium, umfassend einen Induktor zur Steigerung der Sekretion von Lipasen
b) Isolierung des die Lipasen umfassenden Kulturüberstandes,
c) Proteinfällung,
d) Konzentrierung, und
e) Reinigung der Lipase,
wobei Schritte c-e in jeder Reihenfolge oder gleichzeitig durchgeführt werden können.

12. Von einem Basidiomyceten, bevorzugt *Pleurotus citrinopileatus* oder *Flammulina velutipes,* abgeleitete Lipase, die in der Lage ist, die freien Fettsäuren Essigsäure, Buttersäure, Capronsäure, Caprylsäure und Caprinsäure aus Triglyceriden freizusetzen,
optional erhältlich durch ein Verfahren nach Anspruch 11.

13. Lipase nach Anspruch 12, welche eine Aminosäuresequenz umfasst, die mindestens 80%, bevorzugt 100% Identität mit einer Sequenz von SEQ ID NO:2 aufweist,
wobei die Lipase von einem Basidiomyceten abgeleitet ist, z.B. aus *Flammulina velutipes,*
wobei die Lipase nicht SEQ ID NO: 1 aufweist oder i) an eine Aminosäuresequenz gekoppelt ist, die die Aufreinigung erleichtert und/oder ii) in gentechnisch veränderten Bakterien oder Hefen hergestellt wurde.

14. Expressionsvektor, der eine Lipase nach Anspruch 13 kodiert oder einen solchen Expressionsvektor umfassende transformierte Wirtszelle, wobei die Wirtszelle ausgewählt ist aus der Gruppe umfassend Bakterien und Hefe.

15. Verfahren zur Herstellung einer von Basidiomyceten abgeleiteten Lipase, das die folgenden Schritte umfasst:
a) Kultivieren der Wirtszelle nach Anspruch 14, und
b) Isolieren der Lipase aus der Kultur.

16. Verfahren zur Herstellung eines Molkeprodukts ausgewählt aus der Gruppe um fassend Molke, Lactose oder Molkeprotein, bei dem eine von einem Basidiomyceten abgeleiteten Lipase, bevorzug eine Lipase nach einem der Ansprüche 12 oder 13, zur Herstellung von Käse verwendet und die Molke abgetrennt wird.

17. Käse, der freie Fettsäuren aus der Gruppe bestehend aus Capronsäure, Caprylsäure, Caprinsäure, Essigsäure und Buttersäure und eine von einem Basidiomyceten abgeleitete Lipase umfasst, optional erhältlich durch ein Verfahren nach einem der Ansprüche 2-10.
